# EUROPEAN PATENT SPECIFICATION

(11) **EP 2 538 616 B1**
(45) Date of publication and mention of the grant of the patent: **19.03.2014**
(21) Application number: 12166934.5
(22) Date of filing: 30.05.2008
(51) Int. Cl.: H04L 12/413, H04L 12/403, H04B 3/54

(54) **Communication Method and Apparatus**
Kommunikationsverfahren und -vorrichtung
Procédé et appareil de communication

(30) Priority: 01.06.2007 JP 2007147259; 15.02.2008 JP 2008034332
(43) Date of publication of application: 26.12.2012
(62) Divisional of application: 08765215.2
(73) Proprietor: Panasonic Corporation, Osaka 571-8501 (JP)
(72) Inventor: Ohmi, Shinichiro, Osaka, 540-6207 (JP); Urabe, Yoshio, Osaka, 540-6207 (JP)
(74) Representative: Eisenführ Speiser

(56) References cited:
- EP-A- 1 179 919
- WO-A2-2005/053216
- WO-A2-2005/096583

## Description

### Technical Field

The present invention relates to a communication method, a communication apparatus, an integrated circuit, and a circuit module, which allows plural communication apparatuses sharing a communication medium to communicate with each other.

### Background Art

In communication systems in which plural communication apparatuses sharing a communication medium communicate with each other, such as a power-line communication and a wireless LAN (Local Area Network), since the plural communication apparatuses communicate with each other through a single communication medium, it is necessary to avoid conflicts of accesses from the plural communication apparatuses.

One method thereof is a CSMA/CA (Carrier Sense Multiple Access/Collision Avoidance) method. In this method, communication apparatuses monitor the usage of a communication medium, transmit data when the other communication apparatuses do not use the communication medium, and start the transmission in a random wait time when sensing that the other communication apparatuses do not use the communication medium. Hereinafter, the random wait time is referred to as a back-off time.

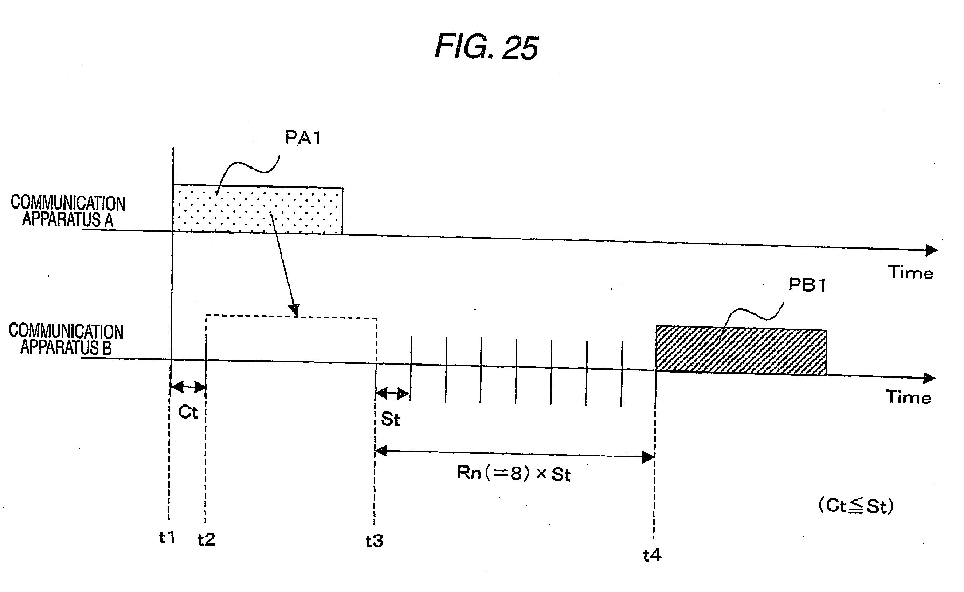

Fig. 25 shows an example of times when transmitting data using the CSMA/CA method. When communication apparatus A transmits packet PA1 at time t1, communication apparatus B connected to the same transmission line (network) senses packet PA1 at time t2 in a carrier sensing time Ct and recognizes that the transmission line is used. When communication apparatus B intends to transmit data through the transmission line, communication apparatus B waits until packet PA1 from communication apparatus A is ended.

When sensing that packet PA1 from communication apparatus A is ended at time t3, communication apparatus B waits for a time period (random back-off time) corresponding to a random number times a unit back-off time (slot time) St. Specifically, when the communication apparatus counts the slot times St and the count value reaches a random value generated at that time, the communication apparatus transmits packet PB1. In the example shown in Fig. 25, the random value is 8 and packet PB1 is transmitted at time t4 with the lapse of time Stx8. The slot time St is set to be equal to or greater than the carrier sensing time Ct. Accordingly, when another communication apparatus having the smaller random value starts the transmission, it is possible to reliably sense the start of transmission from another communication apparatus before counting the slots.

In the example shown in Fig. 25, since no carrier is sensed until counting the random value 8, communication apparatus B can transmit packet PB1. However, when another communication apparatus having the smaller random value than 8 exists, the communication apparatus senses a carrier before time t4, stops the counting, and waits until a packet from another communication apparatus is ended. The method of generating the random value is not fixed necessarily, and the maximum value of the random value to be generated may be changed depending on priority. For example, when the maximum value is increased at the time of re-transmission (returns to the original maximum value with the success of the re-transmission) or when the maximum value is decreased (returns to the original maximum value with the success of the transmission) by sensing the carrier of another communication apparatus during the wait and stopping the counting, it is possible to avoid the continuation of a state where one communication apparatus cannot communicate. The maximum value of the random value to be generated may be changed depending on the traffic condition of the transmission line.

In this way, by employing the CSMA/CA method, when plural communication apparatuses intend to communicate through the same transmission line, the transmission can be started in the random back-off time, thereby reducing the occurrence of collision. However, when the upper limit of the random value is fixed, the collision can easily occur with the increase of the number of accessing devices (the number of communication apparatuses connected to the network) and thus it is not possible to avoid the deterioration in performance. When the random value is increased with the increase of the number of connected devices, the probability of collision is reduced but the average value of the back-off time is increased, thereby deteriorating the performance. Since the access is performed in the random back-off time, it is not possible to define the maximum delay.

In another method of avoiding the conflicts of accesses from plural communication apparatuses, an access right is set every slot (for example, see Patent Document 1). In this method, specific Individual ID numbers are assigned to all the communication apparatuses connected to a transmission line (network) (which is generally performed by a master terminal managing the communication of the network), all the nodes (communication apparatuses serving as a connection point to the network are hereinafter referred to as nodes) count suggestive slot number every constant time (slot time St), and a transmission right is acquired when the Individual ID number assigned to the node and is equal to the slot number. In this case, the slot time St is set to be equal to or greater than the carrier sensing time Ct.

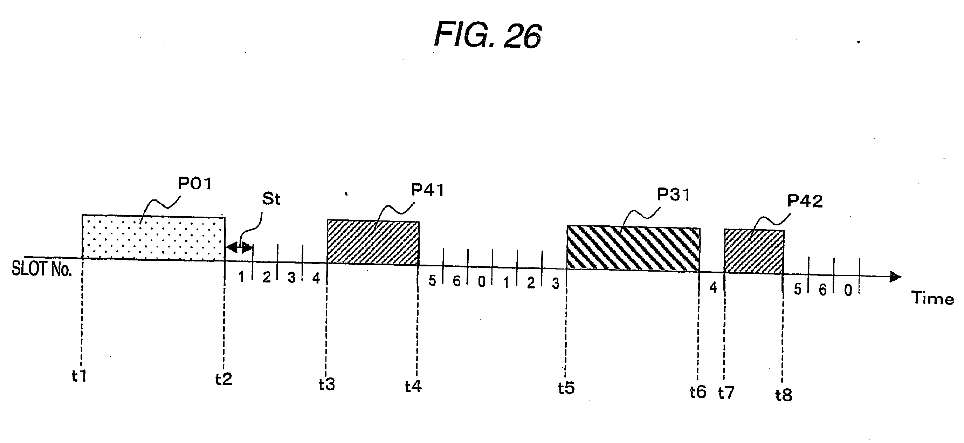

Fig. 26 shows an example of a timing when transmitting data using the slot access method. In the example shown in Fig. 26, the number of nodes connected to a network is 7 (for example, 7 communication apparatuses are connected) and Individual ID numbers 0 to 6 are assigned to the nodes, respectively. Accordingly, the slot number returns to 0 after counting 6.

Here, when the node having the Individual ID number of 0 transmits packet P01 at time t1 and packet P01 is ended at time t2, the nodes start the counting to count the slot number every slot time St. Since the packet (that is, the slot number of 0) of the node having the node number of 0 is being transmitted before time t2, the slot number is set to 1 at time t2 and the nodes count the slot number every slot time St. At this time, when only the node having the Individual ID number of 4 intends to transmit data, the slot number of the node having the Individual ID number of 4 is counted as 4 and the transmission right is given to the node having the node number of 4 to transmit packet P41 at time t3 after the slot time St.

Similarly, when packet P41 is ended at time t4, the node having the node number of 3 transmits packet P31 at time t5 by counting the slot number. When packet P31 is ended at time t6, the node having the node number of 4 transmits packet P42 at time t7 by counting the slot number.

In this way, since the communication apparatus (node) having the transmission right is set every slot, the communication apparatuses can transmit data without any collision of data. However, when the number of connected communication apparatuses increases (when the number of set nodes increases), the overhead increases, thereby deteriorating the performance. Since the transmission right is given to the nodes every circulation of the slot number, it is not possible to set the priority of transmission.
[Patent Document 1] JP-A-2004-320422

### Disclosure of Invention

WO2005/096583 A2 describes a packet-relay unit including a first interface unit, a second interface unit, and a function-setting switch. The second interface unit includes a classifying unit, a priority control unit, and a transceiving unit. When the function-setting switch sets a "QoS function" as "operative", the classifying unit transfers packets transferred from the first interface unit to the priority control unit. The priority control unit provides priority control over the transferred packets such that the transferred packets are preferentially treated at a wireless zone connected to the second interface unit, whereby the priority-controlled packets are transferred to a transceiving unit from the priority control unit. When the function-setting switch sets "the QoS function" as "inoperative", the classifying unit transfers the transferred packets directly to the transceiving unit.

WO2005/053216 A2 describes embodiments of the invention directed to methods and systems for providing efficient, scalable and reliable transport of large media files to multiple receivers over digital video broadcast (DVB) standards-based broadcast networks. Transport Reliability is achieved using Forward Error Correction (FEC) and a selective, Negative Acknowledgement (NACK) mechanism over an IP-based unicast feedback path. Out-of-band command and control messages over DVB network are used for initiation and coordination between sender and receivers.

EP 1 179 919 A2 describes an access contention scheme having both multi-level priorities and a contention-free access indicator for use by a station in a network of stations. A station having a frame to transmit determines from a detected contention control indicator if it is permitted to contend for access to a transmission medium during a contention period. The station determines if the contention control indicator indicates a contention-free access and, if the contention control indicator indicates a contention-free access, the station determines if a channel access priority level associated with the frame to be transmitted is higher than a channel access priority level associated with a last transmitted frame. If so, the station detects whether any station in the network of stations intends to contend for access to the medium at a channel access priority level that is higher than the channel access priority level associated with the frame to be transmitted. If so, the station defers contention for access.

The Invention is contrived to solve the above-mentioned problems, An object of the invention is to provide a communication method and a communication apparatus, which can prevent the occurrence of collision to prevent the deterioration in performance even when the number of connected communication apparatuses increases and which can define the maximum delay of transmission to set the priority.

According to an aspect of the invention, there is provided a communication method as defined in claim 1.

According to another aspect of the invention, there is provided a communication apparatus as defined in claim 9.

As can be apparently seen from the above description, according to the invention, it is possible to provide a communication method and a communication apparatus, which can prevent the occurrence of collision to prevent the deterioration in performance even when the number of connected communication apparatuses increases and which can define the maximum delay of transmission to set the priority.

### Brief Description of Drawings

Fig. 1 is a diagram schematically illustrating an example of a power-line communication system used to embody a communication method and a communication system according to an embodiment of the invention.
Figs. 2A, 2B and 2C are diagrams illustrating an appearance of a PLC modem according to an embodiment of the invention.
Fig. 3 is a diagram illustrating an example of the hardware of the PLC modem according to the embodiment of the invention.
Fig. 4 is a diagram illustrating an example of a digital signal process in the PLC modem according to the embodiment of the invention.
Fig. 5 is a diagram illustrating an example of a data transmission time in a power-line communication system according to the embodiment of the invention.
Fig. 6 is a diagram illustrating an example of the data transmission time in the power-line communication system according to the embodiment of the invention.
Fig. 7 is a diagram illustrating an example of a master terminal management table in the power-line communication system according to the embodiment of the invention.
Fig. 8 is a diagram schematically illustrating a configuration of a buffer provided every priority of data in the PLC modem according to the embodiment of the invention.
Fig. 9 is a diagram illustrating a queue search period of transmission data and a slot generating time according to the embodiment of the invention.
Fig. 10 is a diagram illustrating an example of a random back-off in the power-line communication system according to the embodiment of the invention.
Figs. 11A and 11B are diagrams illustrating another example of the random back-off in the power-line communication system according to the embodiment of the invention.
Figs. 12A and 12B are diagrams schematically illustrating structures of a data frame and a control frame, respectively, in the power-line communication system according to the embodiment of the invention.
Fig. 13 is a diagram illustrating an example of an assigned information format in a beacon according to the embodiment of the invention.
Figs. 14A, 14B and 14C are diagrams illustrating an individual ID number assigning sequence in the power-line communication system according to the embodiment of the invention.
Fig. 15 is a diagram illustrating a common time when all the PLC modems can transmit data in the power-line communication system according to the embodiment of the invention.
Figs. 16A, 16B and 16C are diagrams illustrating an individual ID number deleting sequence in the power-line communication system according to the embodiment of the invention.
Fig. 17 is a diagram schematically illustrating an operation flow of a PLC modem serving as a master terminal in the power-line communication system according to the embodiment of the invention.
Fig. 18 is a diagram illustrating an example of a slave terminal management table in the power-line communication system according to the embodiment of the invention.
Fig. 19 is a diagram schematically illustrating an operation flow of a PLC modem serving as a slave terminal in the power-line communication system according to the embodiment of the invention.
Fig. 20 is a diagram illustrating a transmission and reception flow of a PLC modem serving as a master terminal in the power-line communication system according to the embodiment of the invention.
Fig. 21 is a diagram illustrating a transmission and reception flow of a PLC modem serving as a master terminal in the power-line communication system according to the embodiment of the invention.
Fig. 22 is a diagram illustrating an example of a congestion back-off in the power-line communication system according to the embodiment of the invention.
Fig. 23 is a diagram illustrating a multi segment structure having plural PLC modems as another example of the power-line communication system according to the embodiment of the invention.
Fig. 24 is a diagram illustrating an example of a random back-off in the multi segment structure shown in Fig. 23.
Fig. 25 is a diagram illustrating an example of a time when transmitting data using a CSMA method.
Fig. 26 is a diagram illustrating an example of a time when transmitting data using a slot access method.

### Best Mode for Carrying Out the Invention

Hereinafter, embodiments of the invention will be described with reference to the accompanying drawings.

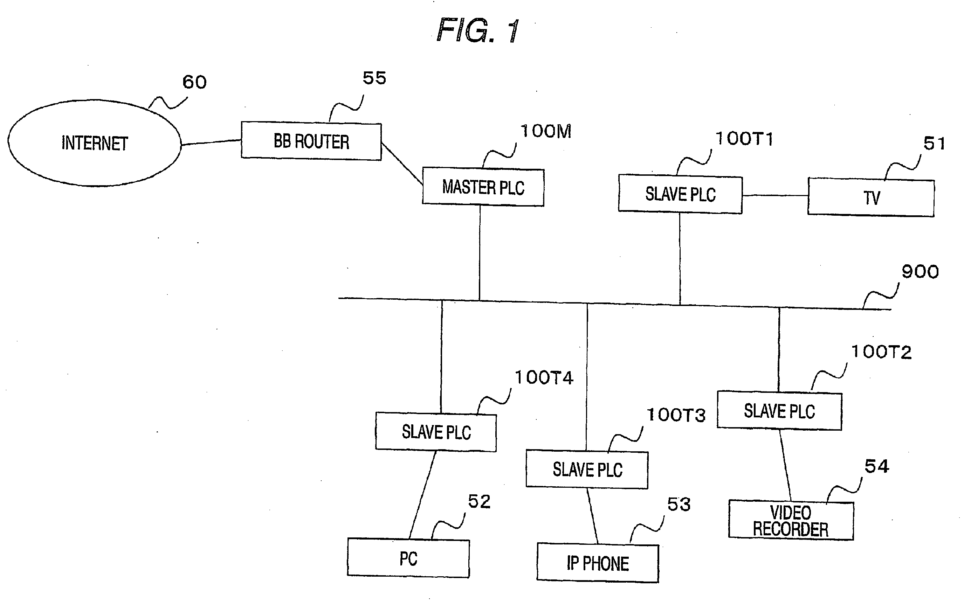

Fig. 1 is a diagram schematically illustrating an example of a power-line communication system for embodying a communication method and a communication system according to the invention. The power-line communication system shown in Fig. 1 includes plural PLC (Power Line Communication) modems 100M, 100T1, 100T2, 100T3, and 100T4 connected to a power line 900. Five PLC modems are shown in Fig. 1, but the number of connected modems is arbitrary. The PLC modem 100M serves as a master terminal and manages connection states (link states) of the PLC modems 100T1, ..., 100T4 serving as a slave terminal.

In the following description, the master terminal and the specific slave terminals are described as the PLC modems 100M, 100T1, 100T2, 100T3, and 100T4 and a general slave terminal is described as the PLC modem 100T. The PLC modem not limited to the master terminal and the slave terminals is described simply as the PLC modem 100.

The power line 900 is shown as one line in Fig. 1, but two or more lines. The PLC modem 100 is connected to the lines.

As described in detail later, the PLC modem 100 includes a LAN modular jack such as RJ45. A television (TV) 51, a personal computer (PC) 52, an IP phone 53, a video recorder 54, and a broadband router 55 are connected to the modular jack. The broadband router 55 is connected to the Internet. The power-line communication system is an example of a communication system for embodying the communication method according to the invention and may be another communication system such as a wireless LAN.

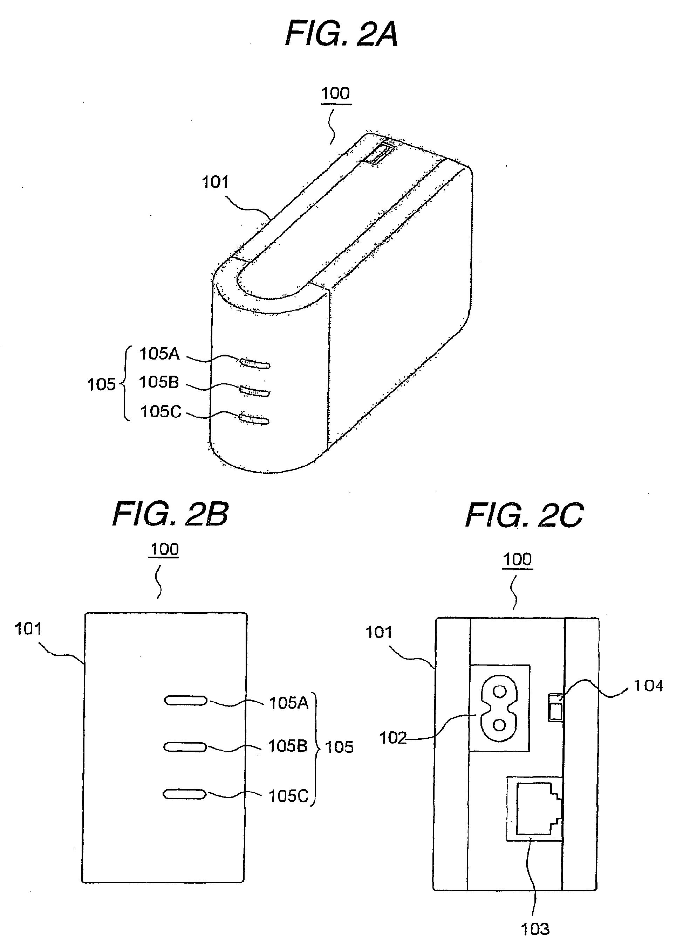

Fig. 2 is a diagram illustrating an appearance of the PLC modem 100, where Fig. 2A is an external perspective view illustrating the front side, Fig. 2B is a front view, and Fig. 2C is a rear view. The PLC modem 100 shown in Fig. 2 includes a chassis 101 and as shown in Figs. 2A and 2B, and a display unit 105 including LEDs (Light Emitting Diodes) 105A, 105B, and 105C is disposed in the front surface of the chassis 101. As shown in Fig. 2C, a power source connector 102, a LAN modular jack 103 such as a RJ45, and a switch 104 for switching an operation mode, etc. are disposed in the rear surface of the chassis 101. The power cable (not shown in Fig. 2) is connected to the power source connector 102 and a LAN cable (not shown in Fig. 2) is connected to the modular jack 103. The PLC modem 100 may further include a Dsub (D-Subminiature) connector for connection to a Dsub cable.

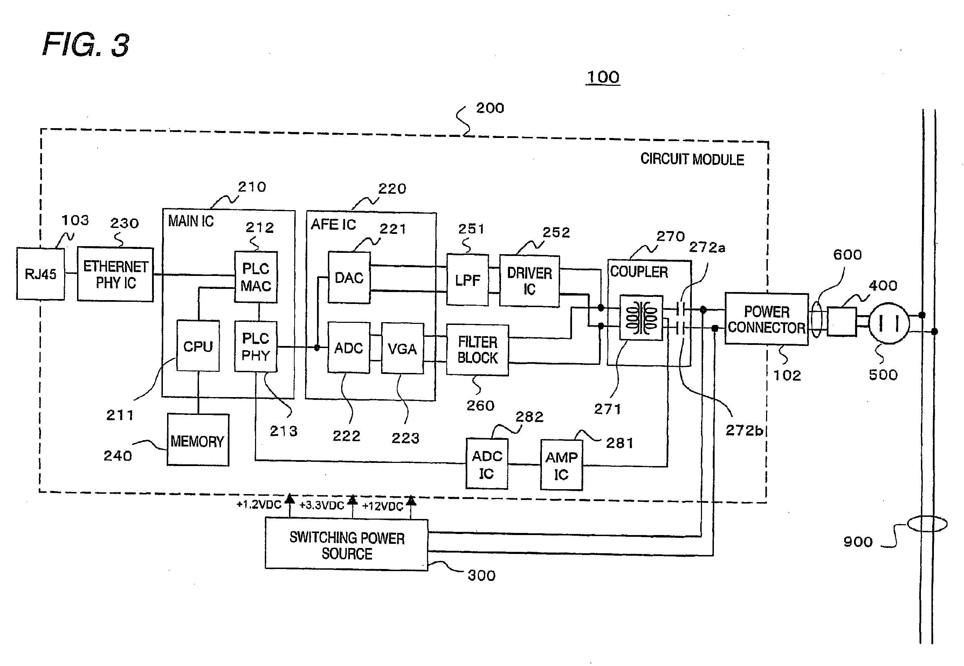

Fig. 3 is a block diagram illustrating an example of the hardware of the PLC modem 100. The PLC modem 100 includes a circuit module 200 and a switching power source 300 as shown in Fig. 3. The switching power source 300 serves to supply various voltages (for example, +1.2 V, +3.3 V, and +12 V) to the circuit module 200 and includes, for example, a switching transformer and DC-DC converter (which are not shown).

The circuit module 200 includes a main IC (Integrated Circuit) 210, an AFE IC (Analog Front End Integrated Circuit) 220, an Ethernet PHY IC (Physical Layer Integrated Circuit) 230, a memory 240, a low-pass filter (LPF) 251, a driver IC 252, a band-pass filter (BPF) 260, and a coupler 270. The switching power source 300 and the coupler 270 are connected to the power connector 102 and are connected to the power line 900 through a power cable 600, a power plug 400, and a socket 500. The main IC 210 serves as a control circuit for performing the power line communication.

The main IC 210 includes a CPU (Central Processing Unit) 211, a PLC MAC (Power Line Communication Media Access Control layer) block 212 and a PLC PHY (Power Line Communication Physical layer) block 213. The CPU 211 includes a 32-bit RISC (Reduced Instruction Set Computer) processor. The PLC MAC block 212 serves to manage a MAC layer of a transmission/reception signal and the PLC PHY block 213 serves to manage a PHY layer of the transmission/reception signal. The AFE IC 220 includes a DA converter (DAC) 221, an AD converter (ADC) 222, and a variable gain amplifier (VGA) 223. The coupler 270 includes a coil transformer 271 and coupling capacitors 272a and 272b. The CPU 211 controls the operations of the PLC MAC block 212 and the PLC PHY block 213 by the use of data stored in the memory 211 and also controls the entire operations of the PLC modem 100.

The communication using the PLC modem 100 is schematically performed as follows. Data input from the modular jack 103 ser sent to the main IC 210 through the Ethernet PHY IC 230 and a digital transmission signal is generated by performing a digital signal process. The generated digital transmission signal is converted into an analog signal by the DA converter (DAC) 221 of the AFE IC 220 and is output to the power line 900 through the low-pass filter 251, the driver IC 252, the coupler 270, the power connector 102, the power cable 600, the power plug 400, and the socket 500.

The signal received from the power line 900 is sent to the band-pass filter 260 through the coupler 270, the gain thereof is adjusted by the variable gain amplifier (VGA) 223 of the AFE IC 220, and then the resultant signal is converted into a digital signal by the AD converter (ADC) 222. The converted digital signal is sent to the main IC 210 and is converted into digital data by performing the digital signal process thereon. The converted digital data are output from the modular jack 103 through the Ethernet PHY IC 230.

An example of the digital signal process performed by the main IC 210 is described now. The PLC modem 100 performs a multi carrier communication using plural sub-carriers in an OFDM (Orthogonal Frequency Division Multiplexing) method, etc. The digital process of converting transmission data into an OFDM transmission signal and converting the OFDM reception signal into reception data is performed mainly by the PLC PHY block 213.

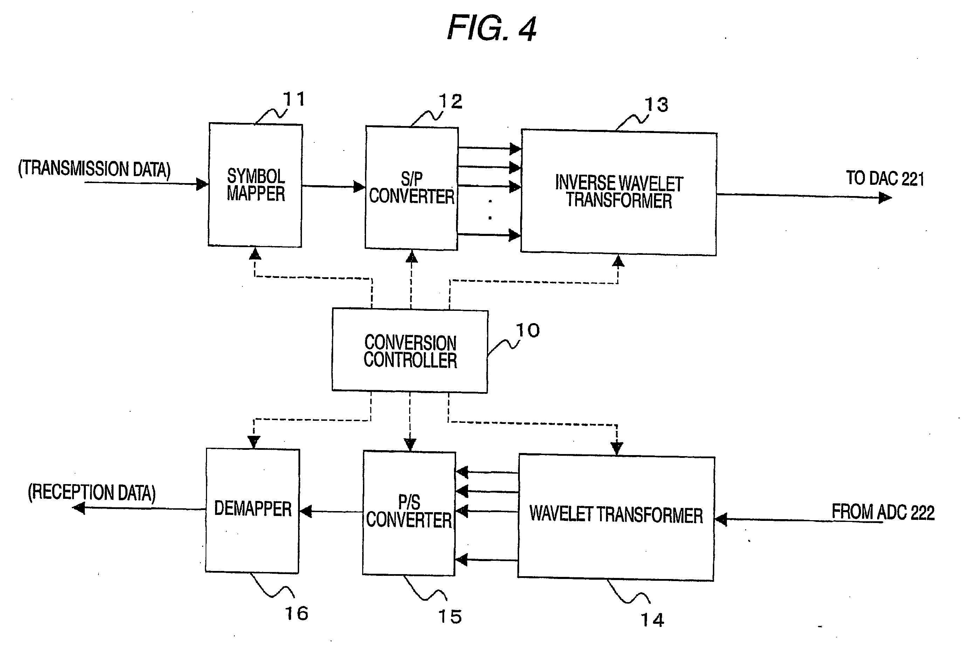

Fig. 4 is a functional block diagram illustrating an example of the digital signal process performed by the PLC PHY block 213, where an OFDM transmission using a wavelet transform is performed. As shown in Fig. 4, the PLC PHY block 213 serves as a conversion controller 10, a symbol mapper 11, a serial-parallel converter (S/P converter) 12, an inverse wavelet transformer 13, and wavelet transformer 14, a parallel-serial converter (P/S converter) 15, and a demapper 16.

The symbol mapper 14 serves to convert bit data to be transmitted into symbol data and to perform a symbol mapping (for example, PAM modulation) on the basis of the symbol data. The S/P converter 12 serves t convert mapped serial data into parallel data. The inverse wavelet transformer 16 serves to inverse-wavelet transform parallel data into data in a time axis and to generate a series of sample values indicating transmission symbols. The data are sent to the DA converter (DAC) 221 of the AFE IC 220.

The wavelet transformer 14 serves to discrete-wavelet transform the received digital data (a series of sample values sampled at the same sample rate as transmission) obtained from the AD converter (ADC) 222 of the AFE IC 220 into a value on a frequency axis. The P/S converter 15 serves to convert parallel data on the frequency axis into serial data. The demapper 16 serves to acquire reception data by calculating amplitudes of sub carriers and determining the reception signal.

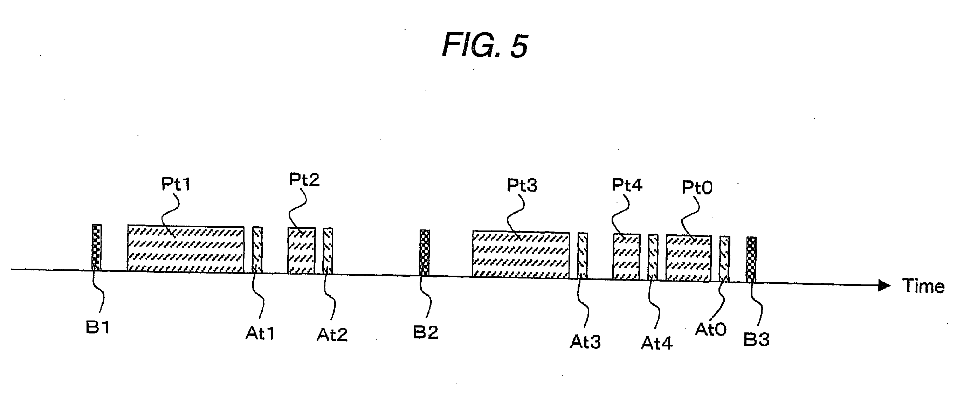

In transmitting data in the power-line communication system shown in Fig. 1, as shown in Fig. 5, when the PLC modem 100 as a transmission source transmits data frames Pt1 to Pt4 and Pt0 and the PLC modem 100 as a transmission destination normally receives the frames, it transmits acknowledgement frames At1 to At4 and At0. Information for managing the communication between the PLC modems is transmitted with a constant interval as notification frames (control frame; beacon) B1, B2, B3, ... from the PLC modem 100M. Here, Pt0 and At0 are a data frame and an acknowledgement frame which are transmitted and received at a common time to be described later.

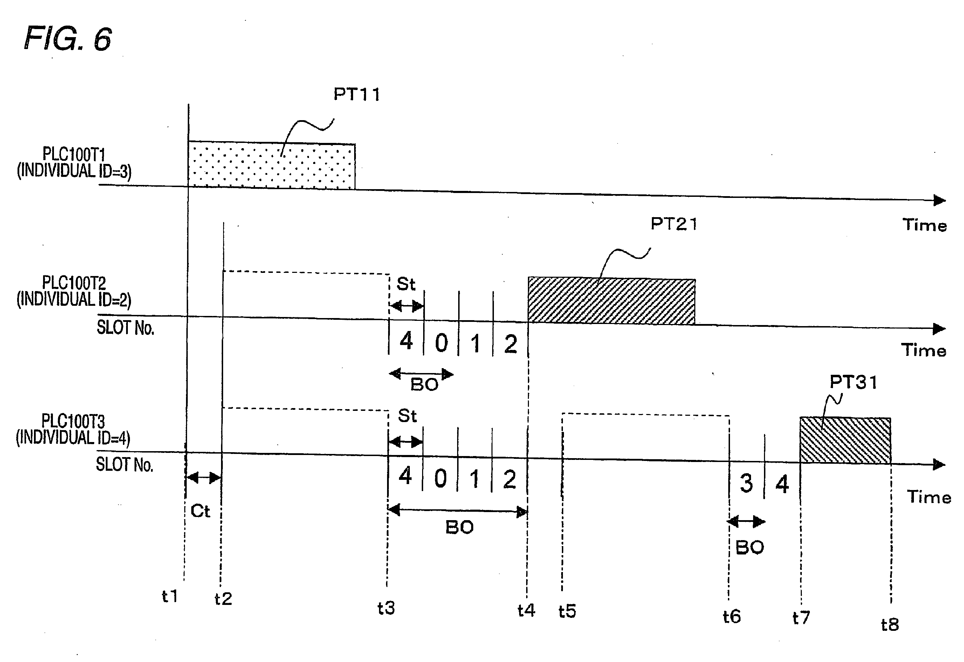

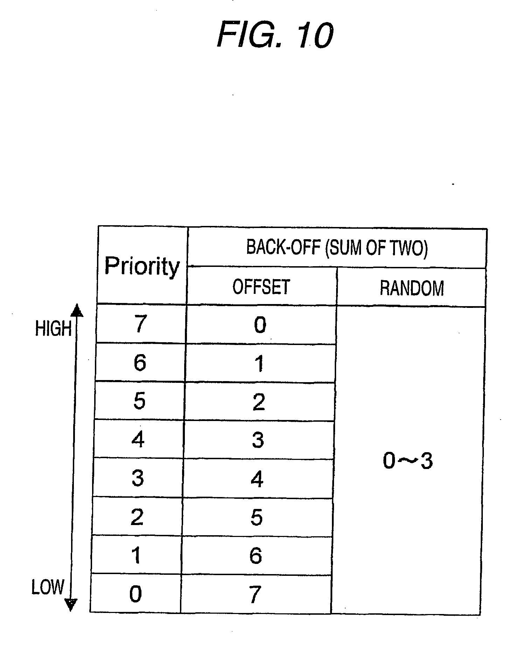

In the example shown in Fig. 5, the data frames Pt1 to Pt4 and Pt0 from the plural communication apparatuses are transmitted without collision, but the PLC modem 100 make an access at the times shown in Fig. 6 so as to transmit data without collision. Fig. 6 shows an example of transmission times of data from the PLC modem 100. In the example shown in Fig. 6, 10 PLC modems of the PLC modem 100M (master terminal 100M) and the PLC modems 100T1 to 100T9 are connected to the power line 900, but only the transmission times of three PLC modems 100T1 to 100T3 are shown in Fig. 6. The process of controlling the transmission times is performed by the main IC 210 shown in Fig. 3.

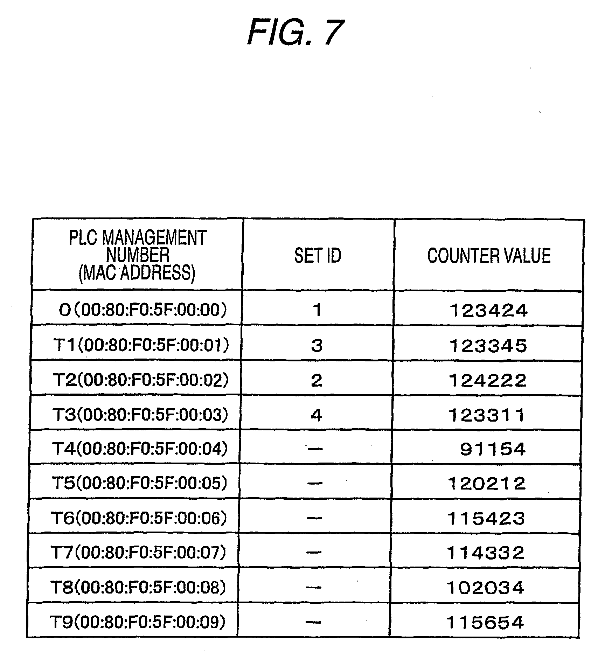

Fig. 7 shows a schematic configuration of a terminal (PLC modem) management table of the PLC modem 100M. In the terminal management table of the master terminal, assigned (effective) Individual ID numbers and counter values indicating the latest transmission time of the corresponding PLC modem are stored to correspond to management numbers (where the management numbers are 0, T1, T2, ... to correspond to the reference numerals and the MCA addresses are described) of the PLC modems connected to the power line. The counter values are described later. The management numbers of the PLC modems may be a simple number or only a MAC address. Alternatively, both may be stored. The terminal management table is stored in a memory (for example, the memory 240 shown in Fig. 3) of the PLC modems. The Individual ID numbers serves to allow only the assigned PLC modem to transmit data at the specific time corresponding to the respective Individual ID numbers.

The total number of individual ID numbers is predetermined regardless of the number of connected PLC modems 100 and the greater number of Individual ID numbers than the predetermined number are not assigned. In this example, four Individual ID numbers in maximum are assigned. For example, the Individual ID number=1 is fixedly assigned to the PLC modem 100M as the master terminal and the other Individual ID numbers are assigned to the other PLC modems T1 to T9 under the control of the PLC modem 100M. The Individual ID number fixedly assigned is not limited to 1, but may be a different value. The Individual ID number may not be fixedly assigned to the master terminal. At the time shown in Fig. 7, the Individual ID numbers of 2, 3, and 4 are assigned to the PLC modem 100T2, the PLC modem 100T1, and the PLC modem 100T3, respectively. The Individual ID numbers may be described simply as an ID number. As described later, in order to specify the time when all the PLC modems can transmit data, the common ID number may be set to the Individual ID number of 0 and the transmittable time corresponding to the respective IDs (the Individual ID numbers and the common ID number are comprehensively called access ID numbers) may be described as a slot. The common ID number is not limited to 0, but for example, the Individual ID number fixedly assigned to the master terminal may be set to 0 and the common ID number may be set to 1.

When the PLC modem returns an acknowledgement frame, the acknowledgement frame may include information on the access ID numbers. By allowing the acknowledgement frame to include the access ID numbers, it is possible to notify the transmission times to the PLC modems (also referred to as hidden terminals) which cannot directly receive the data.

In Fig. 6, when the PLC modem 100T1 transmits packet PT11 at time t1, the PLC modems 100T2 and 100T3 senses packet PT11 at time t2 after the carrier sensing time (for example, 25 µsec) Ct. Accordingly, it is possible to sense that the transmission line is in use (although not shown in Fig. 6, the other PLC modems 100T4 to 100T9 connected to the power line to constitute the network can also sense it). When the PLC modems 100T2 and 100T3 intend to transmit data through the transmission line, the PLC modems 100T2 and 100T3 wait until packet PT11 from the PLC modem 100T1 is ended. In this way, when transmitting data, the PLC modem 100 checks the communication state of the transmission line and checks whether the transmission line is in use.

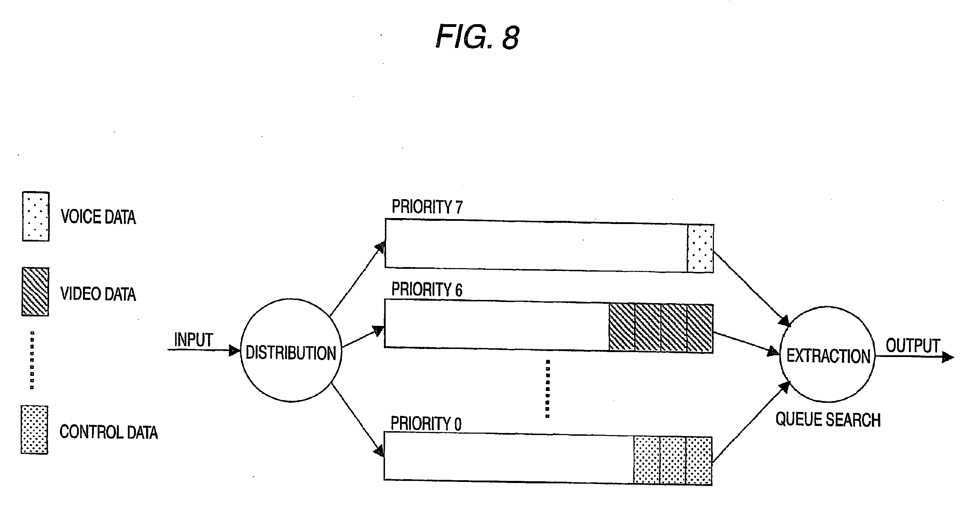

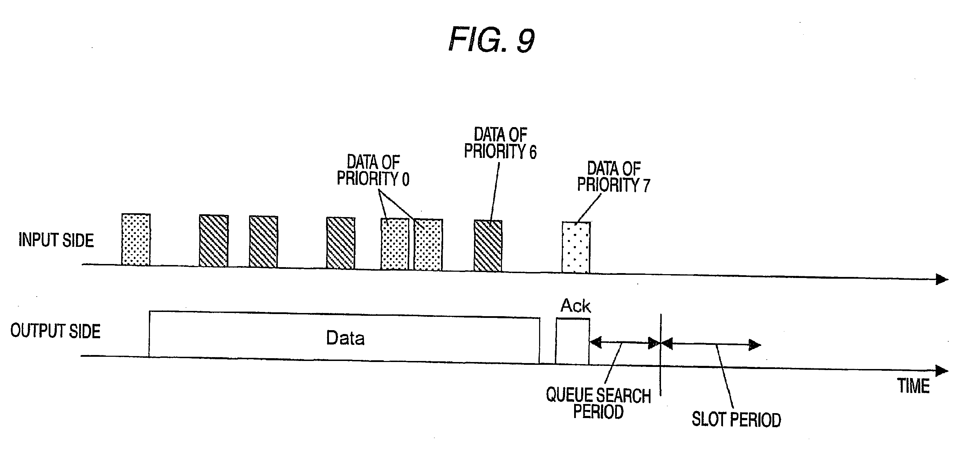

Fig. 8 schematically shows a configuration of a buffer provided every priority of data in the PLC modem. Fig. 9 shows queue search times of transmission data and slot generating times. For example, as shown in Fig. 1, the television 51, it is assumed that the personal computer 52, and the IP phone 53 transmit and receive different types of data and the plural types of data are relayed to the broadband router 55 through the PLC modem 100M. In this case, as shown in Fig. 8, the PLC modem 100M receives data having different priorities (priorities 0 to 7), such as voice data, video data, and control data, from the broadband router 55. The data input to the PLC modem are distributed to the queues of the priorities and stored in the buffers corresponding to the queues. At the time of outputting the data, the queue search is performed to secure the QoS and the data are taken and output in the order in which the priorities decrease. The priorities of the data are determined by an application treating the data. For example, the application of a real-time voice system such as an IP phone sets the priority to be high so as to prevent the delay. A web access and the like set the priority to be low, because the influence of the delay is small.

At the time of outputting data, the queue search period is provided after the data frame shown in Fig. 9 or after the acknowledgement frame (Ack) corresponding to the data frame. The queue of the transmission data is searched out for the queue search period and the data are selected and output sequentially from the highest priority. Accordingly, even when data having high priority 7 is input just before the queue search period, the data of priority 7 can be output prior, thereby enhancing the precision in priority control. After the queue search period, slots are generated as slot times and the counting for the back-off described later is started.

Referring to Fig. 6 again, when the end of packet PT11 is sensed at time t3, the PLC modems 100 start the counting and count the slot number every slot time St (for example, 20 µsec). The PLC modems wait for the transmission until the slot corresponding to the Individual ID number assigned thereto after a random time (referred to as a time (a random back-off time) corresponding to the random number times the slot time St (hereinafter, referred to as random back-off)). In this example, the random back-off of the PLC modem 100T2 is "4" and the random back-off of the PLC modem 100T3 is "2."

Fig. 10 shows an example of the random back-off. In Fig. 10, a sum of an offset (fixed portion) and a random (random portion) is an actual back-off value. In this case, the offset is decreased as the priority increases. When the priorities based on the types of voice data, video data, and control data are 3, the fixed portion is 4 and the random portions are 0 to 3. Accordingly, the values of 4, 5, 6, and 7 are randomly generated. The random values are calculated at time t3 by the PLC modems 100.

Since packet PT11 is a packet having the Individual ID number of 3, the slot number is set to "4" at time t3 and is cyclically counted. Since the Individual ID number of the PLC modem 100T3 is "4" but the random back-off time (described as BO in Fig. 6) does not pass, it is not determined as a transmittable time. Since it is sensed at time t4 that the slot having the slot number of 2 passes and the random back-off time passes, the PLC modem 100T2 having the Individual ID number of 2 transmits packet PT21. Packet PT21 is sensed at time t5 after the carrier sensing time Ct, the slot number is not counted. Accordingly, the packets based on the other access ID numbers are not transmitted and thus the collision of the packets does not occur.

When the end of packet PT21 is sensed at time t6, the slot number is set to "3" and the counting thereof is started. Since it is sensed at time t7 after the random back-off time that the slot having the slot number of 4 passes, packet PT31 is transmitted. It is not essential to wait for the random back-off time and it may be omitted. The random back-off time may be changed depending on the number of priorities or assigned Individual ID numbers and a condition of interference with another network.

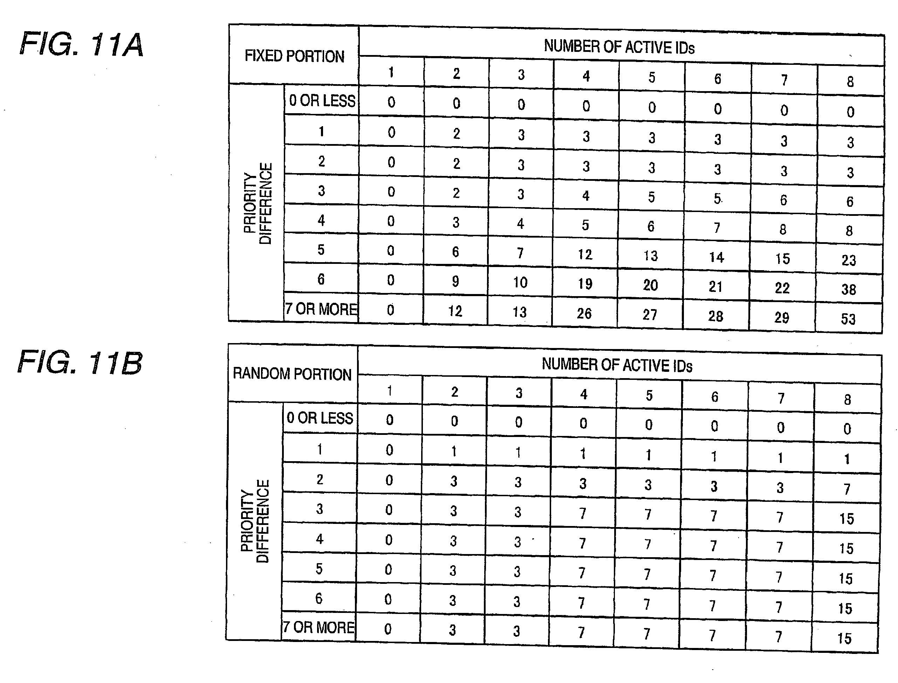

Fig. 11 shows another example of the random back-off. In the table shown in Fig. 11, the random back-off may be calculated from matrices of a difference (priority difference) between the assigned priority and the maximum priority and the number of active IDs (the number of terminals to which the master terminal assigns the Individual ID number). As the back-off value of the random back-off, a fixed portion of the offset shown in Fig. 11A and a random portion shown in Fig. 11B are calculated. Here, the random portion indicates the upper limit and is a random number from 0 to the upper limit. In this case, as the priority difference is smaller, the back-off value is smaller. The back-off value is changed depending on the number of active IDs, and the back-off value is set smaller as the number of active IDs. Accordingly, when the priority difference is small, the back-off time can be decreased, thereby reducing the loss due to the back-off. When the priority difference is great, the back-off time can be increased, thereby enhancing the precision in priority control. When the number of active IDs is small, the back-off time can be decreased to suppress the unnecessary back-off, thereby realizing the priority control with the minimum back-off time. In the example shown in Fig. 11, similarly to the example shown in Fig. 10, the random back-off may be calculated using the priority instead of the priority difference. The back-off value may not be changed but fixed on the basis of the number of active IDs.

As described above, since the upper limit of the number of assigned Individual ID numbers is set to a predetermined number, the slot period is not greater than a predetermined time, thereby advance the transmission time from the PLC modem 100 intending to transmit data. In general, since all the PLC modems 100 hardly intend to simultaneously transmit data, there is no problem even when the Individual ID numbers are assigned to only some PLC modems 100. Although the transmission times of the PLC modems 100T1 to 100T3 to which the Individual ID numbers are assigned are shown in Fig. 6, the transmission of data is performed with the slot having the slot number 0 when the PLC modems 100 to which the Individual ID numbers are not assigned among the other PLC modems 100 intend to transmit data.

The information of the master terminal management table shown in Fig. 7 includes the Individual ID numbers assigned to the slave terminals, the identification information (for example, MAC addresses) for identifying the communication apparatuses to which the Individual ID numbers are assigned, and the counter values counted every predetermined time from the start of the corresponding communication apparatus and indicating the time when data are finally transmitted from the communication apparatus. For example, the counter value is counted every 1 µsec.

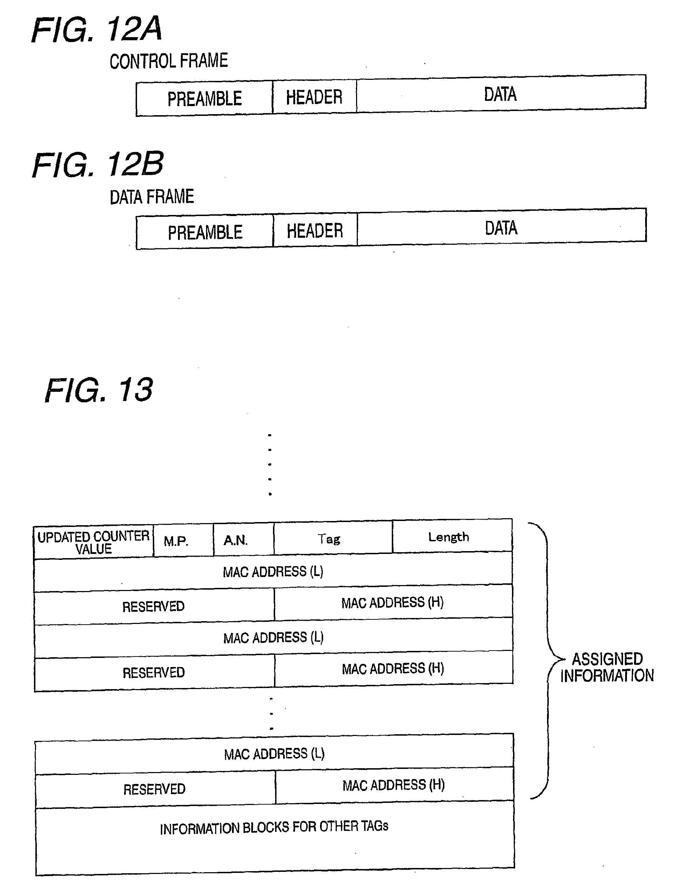

The control frame is notified by allowing the PLC modem 100M to transmit the control frame to the other PLC modems 100T1 to 100T9. The structure of the control frame is shown in Fig. 12A. In the control frame, the control information containing the Individual ID number assignment information is added to data subsequent to a preamble and a header. The Individual ID number assignment information includes the newly assigned Individual ID numbers, the identification information for identifying the communication apparatuses to which the access information is assigned, and the number of effective Individual ID numbers among the Individual ID numbers, thereby reducing the notification data. As described later, when the assigned Individual ID number is deleted, the assigned communication apparatus notifies as the control information the deleted Individual ID number, the identification information for identifying the communication apparatus to which the Individual ID number is assigned, and the number of effective Individual ID numbers among the Individual ID numbers.

Fig. 13 is a diagram illustrating an example of an assigned information format in a beacon. The beacon as the notification frame may include the assigned information format for notifying the assigned information shown in Fig. 13. With the assigned information format, information on the maximum priority corresponding to the Individual ID numbers or the common ID number of the entire communication apparatuses and the MAC addresses and the number of active IDs can be periodically transmitted. Here, the assigned information format includes an update counter, a maximum priority (M.P.: Max Priority), the number of active IDs (A.N.: Active Num), and MAC addresses (MAC addr) arranged in the order of Individual ID numbers. Tag, Length, and the like for indicating other information are also provided. With the number of active IDs, the slave PLC modems can sense the slot period. The slot period is obtained by adding 1 to the number of active IDs (adding the assigned period to the common ID number). The maximum priority is the value of the maximum priority sensed by the master terminal in the previous beacon period. The update counter is a counter value counted up when the ID assignment information is updated. The MAC address includes 15 MAC addresses (from ID=1 to ID=15) in the order of assigned Individual ID numbers. Here, the MAC address is NULL (=0) when the Individual ID number is not assigned.

The slave PLC modem compares the update counter stored in the memory register with the update counter of the beacon, checks the assigned information of the Individual ID numbers when it is updated, and acquires the number of active IDs and the maximum priority every time. When the Individual ID number is not assigned to the slave PLC modem as the check result at the time of reception, the slave PLC modem opens the Individual ID number at once. Only the changed Individual ID number is notified in notifying the assigned information using the above-mentioned control frame, but all the Individual ID numbers (or all the MAC addresses) are notified in notifying the assigned information using the beacon. By using the beacon, it is not necessary to confirm the reception of information individually using the control frame, thereby enhance the efficiency. By always notifying the newest information, it is possible to early return to the original state even in an abnormal state where the information is different between the terminals. The notification of the assigned information using the beacon may be performed with a predetermined period, not every beacon period. Instead of the MAC addresses, any information may be used so long as it is information for identifying the terminals.

The data frame transmitted from the PLC modem 100 includes information indicating the slot (a transmission time corresponding to the Individual ID number or a transmission time corresponding to the common ID number) at which the data frame is transmitted. An example of the structure of the data frame is shown in Fig. 12B. In the data frame, data to be transmitted is included subsequent to the preamble and the header. For example, the Individual ID number or the common ID number, priority information, and the like are added to the header of the data frame. Accordingly, the transmission line can simply sense the slot number of the packet to be transmitted. The portion to which the Individual ID number or the common ID number is added is not limited to the header, but may be a data portion and is limited to a portion (portion of which the modulation method and the encryption are known and in which the reception data can be demodulated by another communication apparatus) which can skim the PLC modems 100T other than the destination of the data frame. Accordingly, since it can be sensed whether data can be transmitted from the destination to the transmission source or a communication apparatus other than the destination with common modulation method and encryption, the master terminal can sense the slave terminal communicating with it and the type of data without acquiring information on the communication directly from the source or the destination, thereby managing the priority of the communication data.

Next, the Individual ID number assigning process and the assigned Individual ID number deleting process of the master PLC modem 100M will be described.

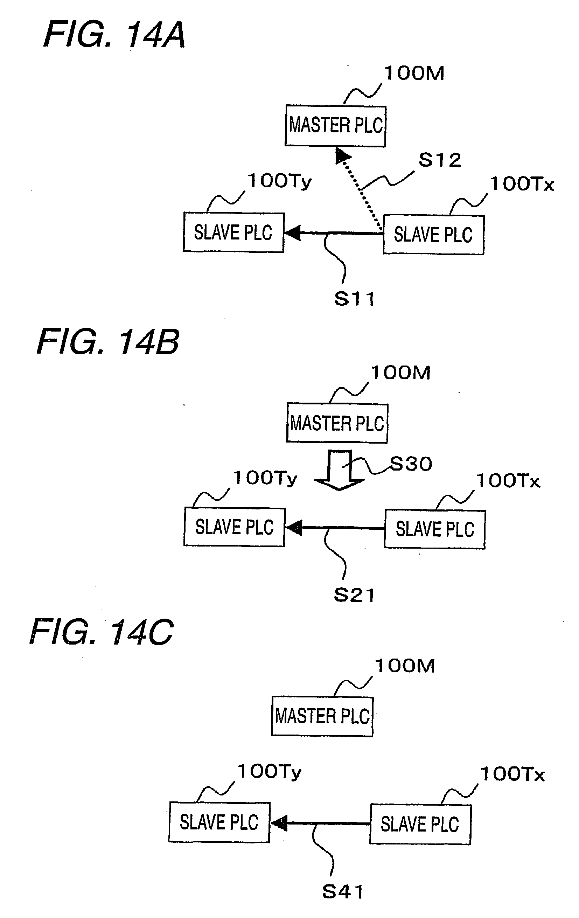

Fig. 14 shows the schematic sequence of the Individual ID number assigning process. It is assumed that the slave PLC modem 100Tx intends to transmit data to another slave PLC modem 100Ty. Then, since the Individual ID number is not assigned to the slave PLC modem 100Tx, the transmission of data is started at the common time when all the PLC modems can transmit data (see S11). At this time, the common ID number "0" is added to the header of the data frame.

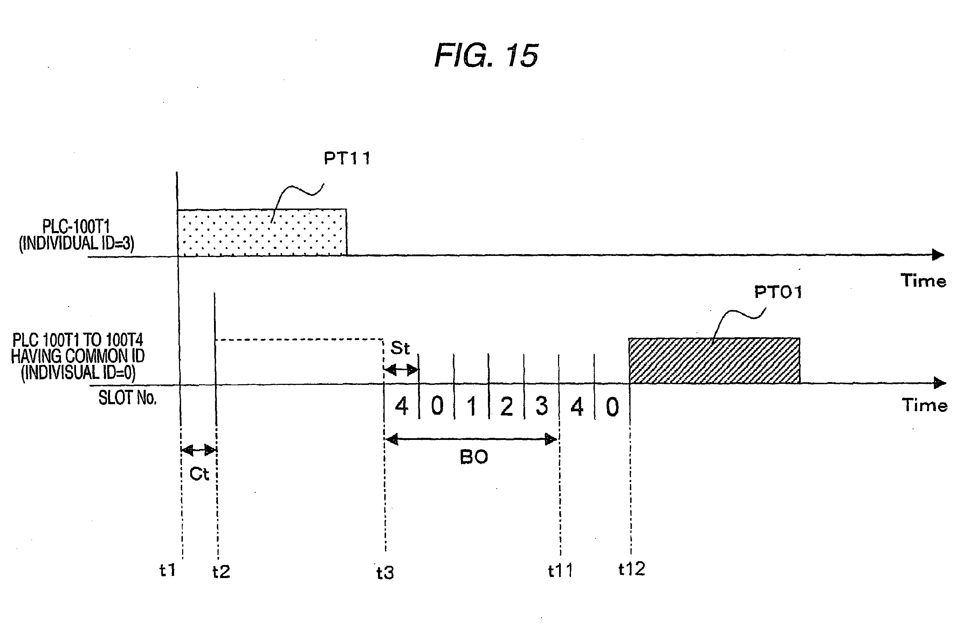

Fig. 15 shows the common time when all the PLC modems can transmit data. Fig. 15 shows an example where the random back-off is 5. The communication apparatus with the common ID (Individual ID number=0) transmits data of PT01 at time t12 which is a time of the Individual ID number of "0" after time 11 when the random back-off time has passed in the slot after the time t3.

The data frame is also sensed by the master PLC modem 100M (see S12). In this way, the master PLC modem 100M monitors the entire communication and assigns the Individual ID number to the slave PLC modem 100Tx having transmitted the data frame when sensing the communication using the common ID number. The assignment is performed on the smaller number of PLC modems than the PLC modems 100 connected to the power line and is unconditionally performed when the smaller number of Individual ID numbers than a predetermined number are assigned. When the predetermined number of Individual ID numbers are assigned already, the assignment may be performed after the assigned Individual ID number is deleted under the below-mentioned condition, or the Individual ID number used in transmitting the data frame may be deleted and the Individual ID number may be assigned.

When the Individual ID number is assigned, as shown in Fig. 14B, the notification frame (control frame, beacon, and the like) is notified from the master PLC modem 100M (see S30). At this time, the transmission of data from the slave PLC modem 100Tx to the slave PLC modem 100Ty is performed at the time of the common ID number (see S21). The control frame includes the newly assigned Individual ID number, the identification information for identifying the communication apparatus to which the individual access information, and the number of effective individual ID numbers among the individual ID numbers. When the control frame is notified from the master PLC modem 100M, the slave PLC modem 100Tx sets the notified individual ID number and the transmission of the data frame thereafter is performed at the time corresponding to the notified individual ID number (see S41).

Like the control frame, a copy of the access ID number of the previously received data frame may be stored in a special frame which is transmitted when the communication medium is secured using a method (for example, the beacon region, the VoIP (Voice over Internet Protocol) Reservation, the TDMA (Time Division Multiple Access), and the like) other than the above-mentioned method. In this case, the side receiving the frame does not check the overlapping of the access ID included in the frame with its individual ID number. Accordingly, the time using the effective individual ID number is maintained and thus the unfair assignment of the individual ID number is prevented. That is, the access ID number of the frame operating in this method before entering the secured region is handed over.

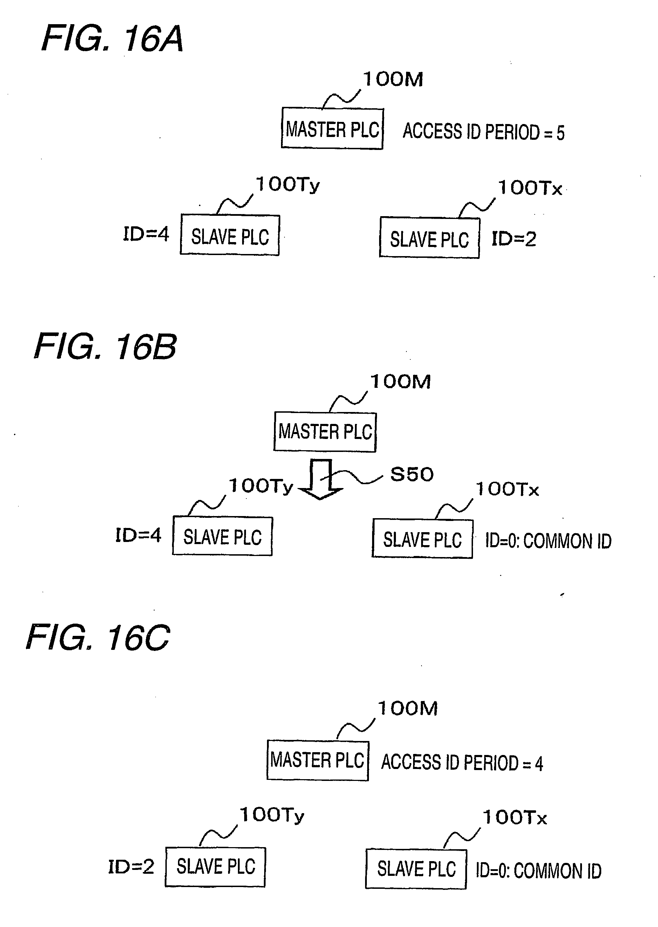

Fig. 16 shows a schematic sequence of the process of deleting the individual ID number assigned to the slave PLC modem 100T. Here, as shown in Fig. 16A, it is assumed that the individual ID number of "2" is assigned to the slave PLC modem 100Tx, the individual ID number of "4" is assigned to the slave PLC modem 100Ty, and the access ID period is "5" (a state where five individual ID numbers including the common ID are assigned). By subtracting the counter value at the times of the final transmission corresponding to the individual ID numbers in the terminal management table managed by the master terminal from the counter value indicating the current time, the counter value corresponding to the time from the time of final transmission to the current time is obtained.

In this state, when the slave PLC modem 100Tx does not transmit data for a predetermined time (β), the slave PLC modem 100Tx senses the fact and deletes the individual ID number of "2". Specifically, the Individual ID number stored in the memory (for example, the memory 240 shown in Fig. 3) in the slave PLC modem 100Tx is deleted and is rewritten into the common ID number of "0" (see Fig. 16B).

When the transmission of data is not performed for a predetermined time (α) (β>α), the master PLC modem 100M monitoring the entire communication can sense the fact and thus deletes the individual ID number of "2" set for the PLC modem 100Tx in the terminal management table. Since the deleted individual ID number is smaller than the maximum value "4" of the individual ID number corresponding to the access ID period =5, the individual ID number "2" is assigned to the PLC modem 100T to which the individual ID number of "4" is assigned and the access ID period is decreased by 1 so as to be the access ID period =4.

It is notified to all the slave PLC modems 100T using the notification frame S50 that the PLC modem 100T to which the individual ID number "2" is assigned is changed and that the individual ID number of the changed PLC modem 100T, the identification information for identifying the communication apparatus to which the individual access information is assigned, and the number of effective individual ID numbers "4" among the individual ID numbers are changed (see Fig. 16B). As a result, the set state shown in Fig. 16C is obtained.

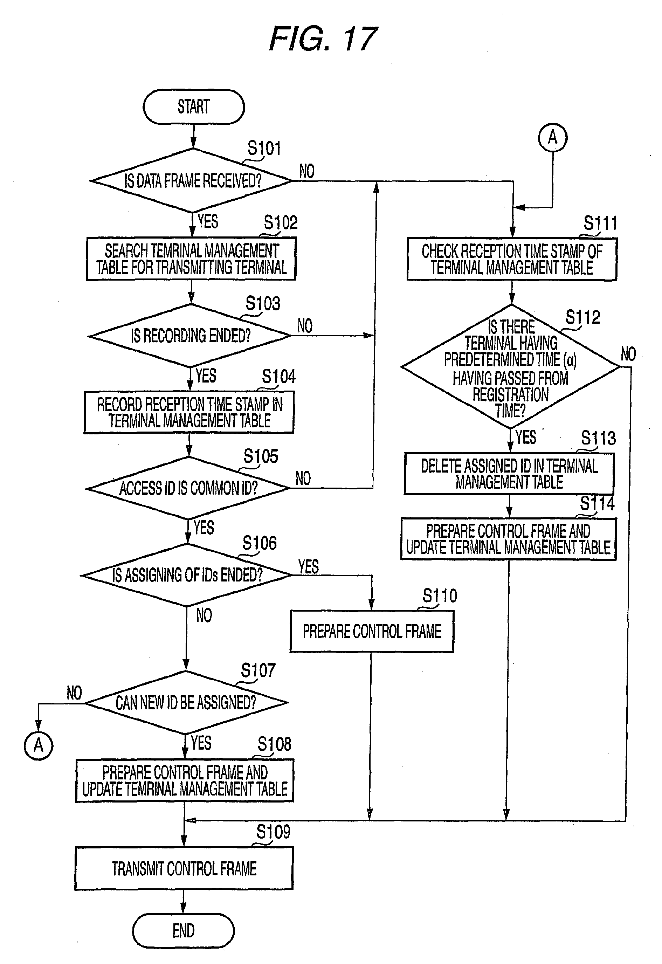

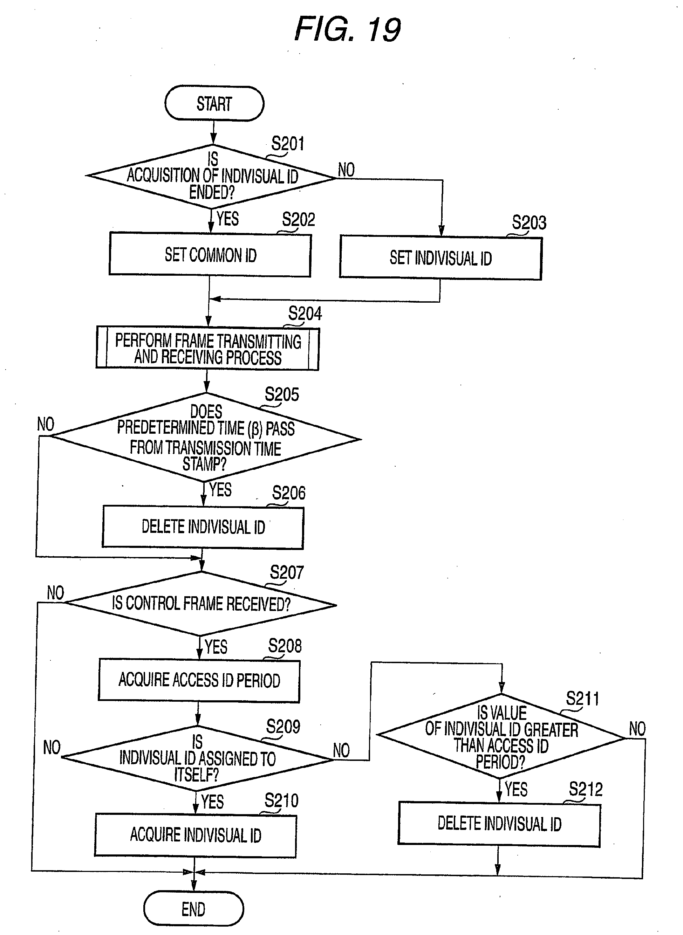

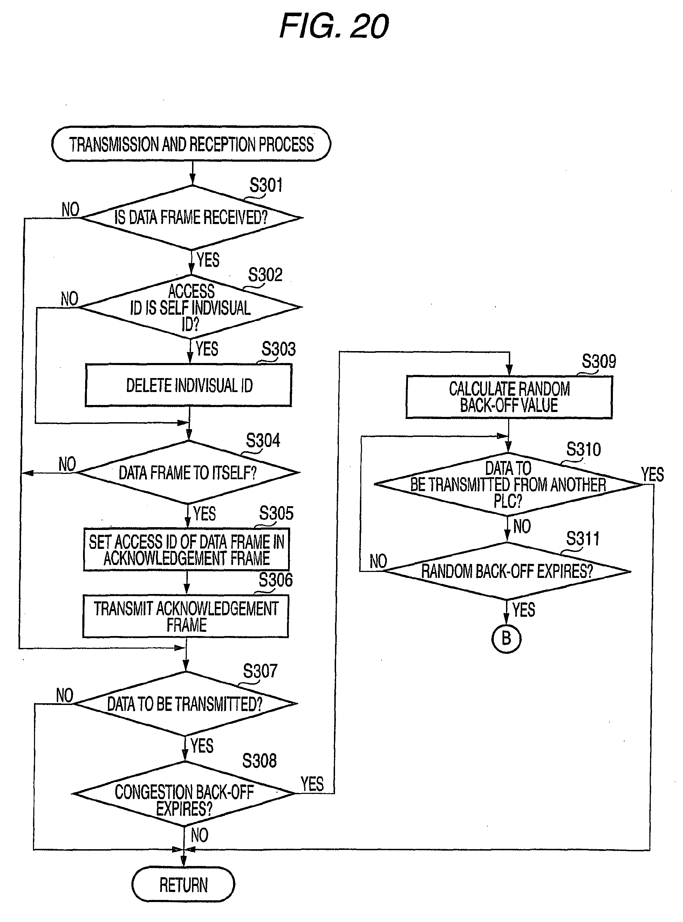

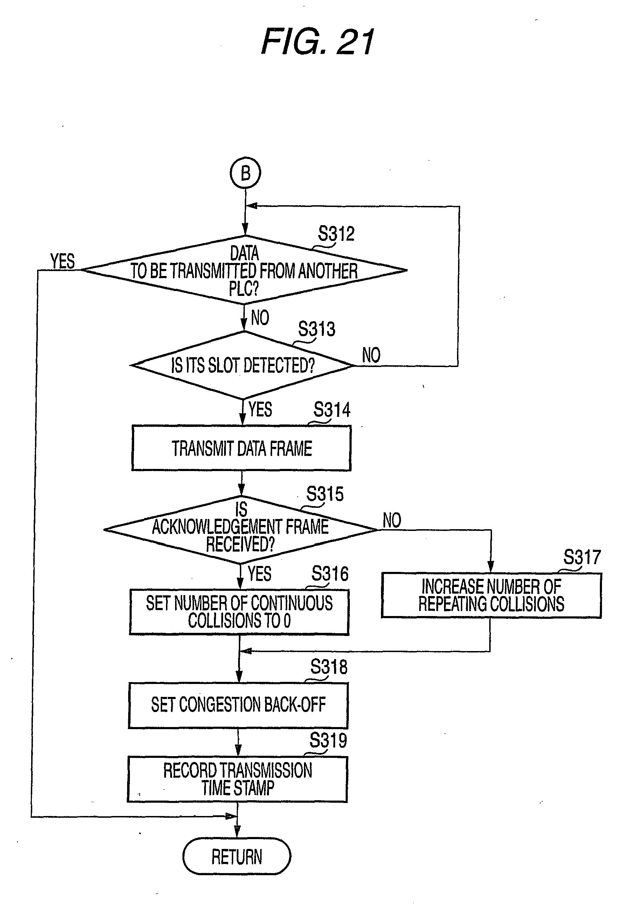

Next, the operation of the PLC modems 100 constituting the power-line communication system shown in Fig. 1 will be described with reference to Figs. 17 to 21. Fig. 17 is a diagram illustrating an operation flow of the PLC modem serving as a master terminal, Fig. 19 is a diagram illustrating an operation flow of the PLC modem serving as a slave terminal, and Figs. 20 and 21 are diagrams illustrating a flow of the transmission/reception operation of the PLC modem serving as a slave terminal.

The operation flow of the master PLC modem will be described now.

In step S101 of Fig. 17, the PLC modem 100M determines whether a data frame is received. When a data frame is received, the PLC modem searches the terminal management table for the management number of the PLC modem as a transmission source of the data frame (step S102). When the management number of the PLC modem as the transmission source is not registered in the terminal management table (determination of step S103), the process of step S111 is performed. Here, the registration means authentication in which the MAC addresses are exchanged in advance to allow the master terminal and the slave terminal to communicate with each other. The master terminal monitors all the data frames and senses the data frame in any one of a communication between the master terminal and the slave terminal and a communication between the slave terminals.

When the management number is registered (it is generally determined that it is registered in step S103), the counter value is recorded as the time stamp for receiving the data frame in the terminal management table in step S104. Then, it is determined whether the access ID number of the data frame is the common ID number (that is, ID=0) (step S105). When it is not the common ID number, the process of step S111 is performed.

When the access ID number is the common ID number, it means that the individual ID number is not assigned and thus the individual ID number assigning process is performed. Prior to the process, it is determined in step S106 whether the individual ID number is assigned already to the PLC modem 100T. This determination step is to prevent the assignment of a new individual ID number when the individual ID number is assigned already but the control frame (notification frame) is not transmitted and the PLC modem 100T is not sensed yet. When the individual ID number is assigned already, the control frame for notifying the assignment of the assigned individual ID number is prepared in step S110 and the control frame is transmitted in step S109.

When it is determined in step S106 that the individual ID number is not assigned to the PLC modem 100T, it is determined in step S107 whether a new individual ID number can be assigned. When the predetermined number of Individual ID numbers are already assigned, a new individual ID number cannot be assigned and thus the process of step S111 is performed. When a new individual ID number can be assigned, the assignment process is performed, the control frame for notifying the result is prepared, and the terminal management table is updated again (step S108). The prepared control frame is transmitted in step S109.

When the data frame is not received (the determination of step S101), when the PLC modem 100T as the transmission source is not registered in the terminal management table (determination of step S103), and when the access ID number of the received data frame is not the common ID number (determination of step S105), the counter values corresponding to all the PLC modem and stored as the time stamp in the terminal management table are checked in step S111. That is, for all the registered PLC modems, by subtracting the counter value indicating the time of final transmission corresponding to the respective individual ID numbers in the terminal management table managed by the master terminal from the counter value indicating the current time, the counter value corresponding to the time from the time of final transmission to the current time is calculated to check the passed time.

When the passed time from the time of final transmission is equal to or greater than the predetermined time (α) (determination of step S112), the individual ID number of the PLC modem (terminal) to which the individual ID number is assigned is deleted in step S113. In step S114, the control frame for notifying the individual ID number assignment state after the deletion is prepared and the terminal management table is updated. The prepared control frame is transmitted (step S109).

When there is no PLC modem to which the individual ID number of which the passed time from the time of final transmission is equal to or greater than the predetermined time (α) is assigned (determination of step S112), the control frame is transmitted in step S109. In this case, the control frame does not include information on the assignment of the individual ID number.

Since the master PLC modem 100M performs such an operation, the individual ID number is set for the PLC modem 100T having transmitted data using the common ID number. When data are not transmitted for the predetermined time (α), the assigned individual ID number is deleted. Then, when the assignment of the individual ID number is changed, the details are notified to all the PLC modems 100T using the control frame.

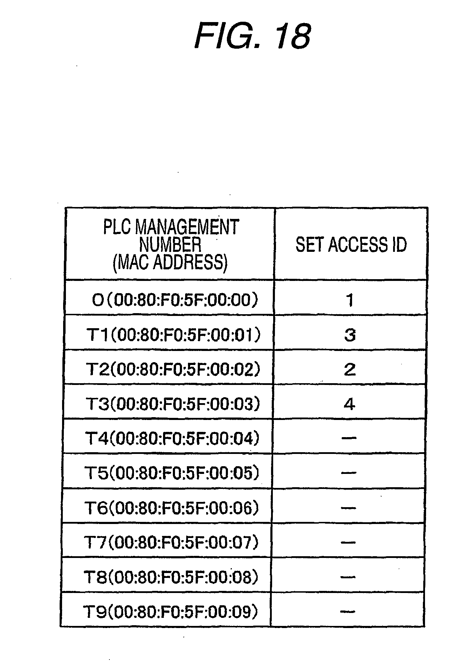

The operation flow of the slave PLC modem will be described now. Fig. 18 shows a schematic configuration of the terminal management table of the slave PLC modem. The slave terminal copies and stores the assigned information (access IDs such as individual ID numbers, MAC addresses, and the like) in the beacon transmitted from the master terminal in the management table shown in Fig. 18. The counter value associated with the access ID when the slave communication apparatus transmits data finally is stored along with the terminal assignment information. The slave terminal may store only its terminal assignment information and the counter value at the time of final transmission.

In step S201 shown in Fig. 19, the slave PLC modem 100T determines whether the assignment of the individual ID number is ended, and sets the individual ID number as the access ID number for determining the time for transmitting the data frame when the assignment is ended (step S203). When the acquisition of the individual ID number is not ended, the common ID number (ID=0) is set as the access ID number for determining the time for transmitting the data frame (step S202). Then, the frame transmitting and receiving process is performed (step S204). The details of the frame transmitting and receiving process will be described later.

When the frame transmitting and receiving process is ended, the counter value corresponding to the time from the time of final transmission to the current time is calculated by subtracting the counter value at the time of final transmission of the PLC modem 100T as the transmission time stamp from the counter value indicating the current time, and then it is determined whether the predetermined time (β) passes (step S205). When the predetermined time (β) passes, the acquired individual ID number is deleted (step S206) and the process of step S207 is performed. When the predetermined time (β) does not pass, the process of step S207 is directly performed.

In step S207, it is determined whether the control frame (including the beacon) is received from the master PLC modem 100M and the procedure is ended when the control frame is not received. When the control frame is received, the number of effective individual ID numbers among the individual ID numbers included in the control frame is acquired (step S208) and it is determined whether the individual ID number is assigned to itself (step S209). When the individual ID number is assigned to itself, the individual ID number is acquired and the procedure is ended (step S210).

When the individual ID number is not assigned (determination of step S209), it is determined whether the value of the stored individual ID number is greater than the access ID period (step S211). When it is greater than the access ID period, it is determined that the stored individual ID number is erroneous, the individual ID number is deleted, and the procedure is ended (step S212).

The details of the frame transmitting and receiving process of step S204 will be described now with reference to Figs. 20 and 21. In step S301 shown in Fig. 20, it is determined whether a data frame is received. When a data frame is not received, the process of step S307 is performed. When a data frame is received, it is determined whether the access ID number of the data frame is its own individual ID number (step S302). When the access ID number is its own individual ID number, an error can be determined and thus the individual ID number is deleted in step S303.

When the access ID number of the data frame is not its own individual ID number and when the individual ID number is deleted, it is determined in step S304 whether the destination of the received data frame is itself. When the destination of the data frame is not itself, the process of step S307 is performed.

When the destination of the received data frame is itself, the access ID number of the data frame is set in the acknowledgement frame in step S305 and the acknowledgement frame is transmitted (step S306). Then, in step S307, it is determined whether data to be transmitted remains. When data to be transmitted do not remain, the procedure is ended. When data to be transmitted remains, it is determined in step S308 whether the back-off expires. When the back-off does not expire, the procedure is ended. This wait time is called a congestion back-off.

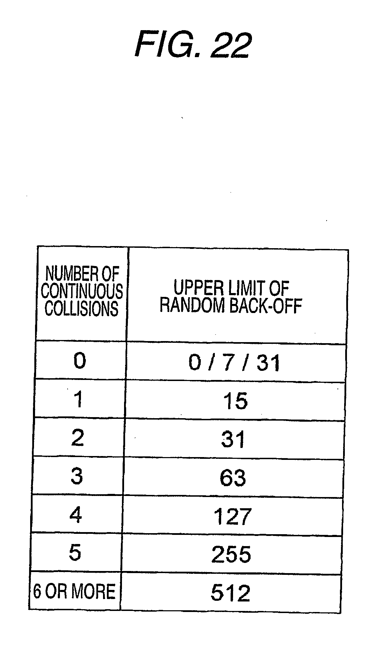

The congestion back-off is to avoid a continuous collision of transmitted frames (particularly, the easy occurrence of collision in access using the common ID number). Fig. 22 shows an example of the congestion back-off. As shown in Fig. 22, the number of continuous collisions (the collisions are sensed on the basis of the fact that the acknowledgement frame cannot be received) changes the range of values of the random back-off.

In the congestion control, when the salve terminal transmits a data frame but senses that the acknowledgement frame does not return from the transmission destination, the master PLC modem or the slave PLC modem generates a random number from 0 to the upper limit to set the back-off. When the common ID number is not used, the first upper limit starts from 0 (no back-off). When the common ID number is used and unicast data of which the acknowledgement frame returns is transmitted, the first upper limit starts from 7. On the other hand, when the common ID number is used and multi-cast data or broad-cast data of which the acknowledgement frame does not return, a value of 31 is used as the first upper limit. When the common ID number is used, a value other than 0 is used as the first upper limit. 7 or 31 as the upper limit is only an example. When the number of repeating collisions is 1 or more, the same upper limit is set regardless of the type of the ID. Then, the back-off value is increased depending on the number of repeating collisions. When the PLC modems simultaneously using the common ID number exist, it is possible to reduce the collisions by the use of the congestion back-off. Particularly, since the multi-cast data or the broad-cast data has no acknowledgement frame, the congestion cannot be sensed and the number of collisions is maintained in 0. When the back-off is set to 0, the repeating collisions occur. However, by setting the great back-off value, it is possible to reduce the number of repeating collisions.

When it is determined in step S308 that the collision back-off expires, the random back-off value is calculated in step S309 and it is determined whether data transmitted from another PLC modem exist (step S310). When data are transmitted from another PLC modem 100, the procedure is ended.

The random back-off value is used to set a random number of transmission times depending on the priority by giving different back-off values depending on the priority set by the PLC modem 100.

When data are not transmitted from another PLC modem 100, the expiration of the random back-off is waited for (step S311). When the random back-off expires, the process of step S312 is performed. Then, when the transmission of data from another PLC modem 100 is sensed, the procedure is ended. When the transmission of data from another PLC modem 100 is not sensed, the sensing of its own slot (transmittable time determined by the set individual ID or the common ID) is waited for (step S313).

When its own slot is sensed in step S313, the data frame is transmitted using the slot (step S314). Then, the reception of an acknowledgement frame is waited for (step S315). When the acknowledgement frame is received, the number of continuous collisions is set to 0 (step S316), the congestion back-off is set (step S318), the counter value indicating the transmission time is recorded (step S319), and the procedure is ended.

When the acknowledgement frame is not sensed, the number of continuous collisions is increased, the congestion back-off is set (step S318), the counter value indicating the transmission time is recorded (step S319), and the procedure is ended.

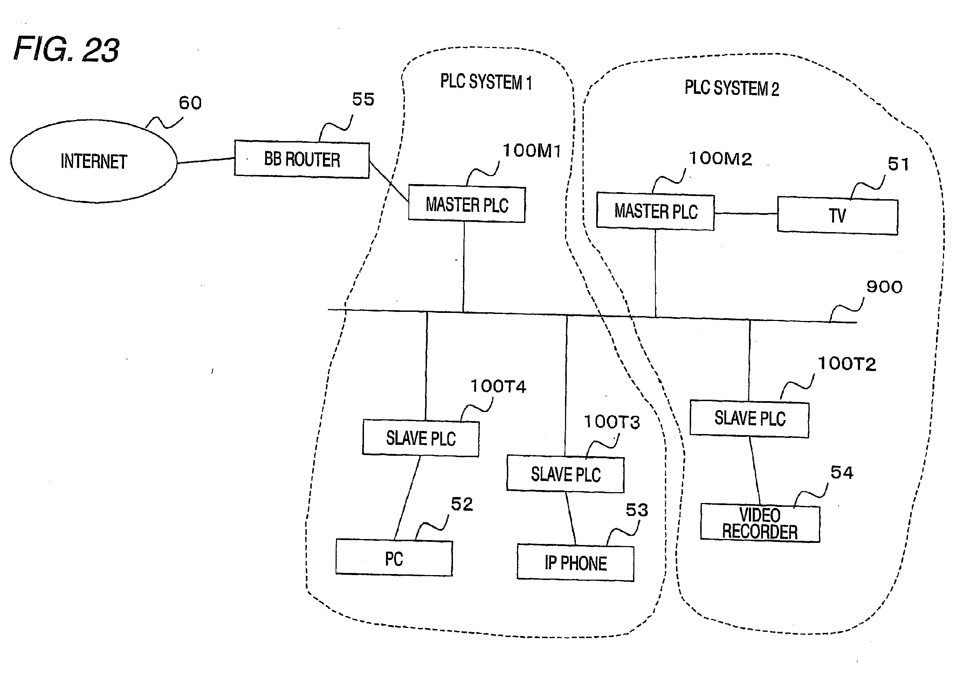

Fig. 23 shows another example of the power-line communication system and is a diagram illustrating a multi segment structure including plural PLC communication systems. Here, a PLC communication system 1 in which a master terminal 100M1, a slave terminal 100T3, and a slave terminal 100T4 can communicate with each other and a PLC communication system 2 in which a master terminal 100M2 and a slave terminal 100T2 can communicate with each other are connected to the same power line 900. The PLC communication system 1 is a PC system using a personal computer 52 and IP phone 53 and the PLC communication system 2 is a TV system using a television 51 and video recorder 54. The multi segment structure means a structure in which plural systems are located adjacent to each other such as a structure in which plural PLC communication systems are connected to the same power line.

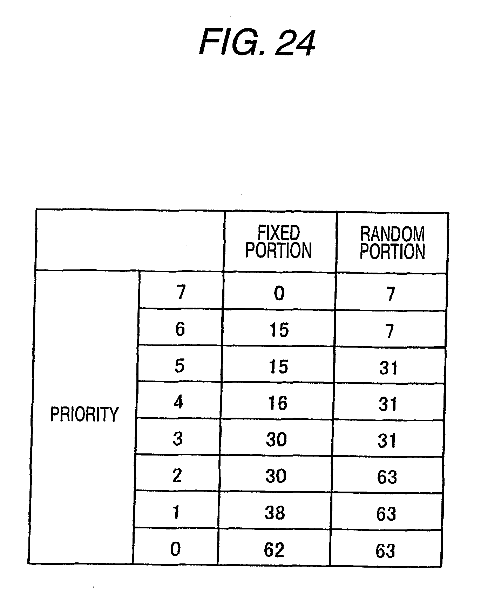

In the multi-segment structure, the random back-off is set as shown in Fig. 24. In this case, the back-off values of the fixed portion and the random portion are determined using only the priority and the number of active IDs or the priority difference is not used. That is, with reference to the fixed portion and the random portion corresponding to its own priority, the number of slots for which it is waited as the random back-off is calculated by generating a random number from 0 to the value of the random portion and adding the generated random number to the fixed value of the fixed portion. Since the master terminals of the PLC communication systems can manage only the corresponding systems. Accordingly, when the back-off is set to be optimal for the corresponding system, a deviation is generated between the networks and the collision frequently occurs. As a result, the priority control using the priority cannot be embodied. Therefore, by using the above-mentioned random back-off, it is possible to embody the priority control even when plural networks are mixed.

Aspects of subject matters described herein are set out in the following clauses.

According to an aspect of the invention, there is provided a communication method of allowing plural communication apparatuses being connected to a transmission line and sharing a communication band to communicate with each other, the communication method including: an individual ID assigning step of assigning an individual access ID to a specific communication apparatus of the plural communication apparatuses and allowing one of the plural communication apparatuses to perform the individual ID assignment of allowing only the assigned communication apparatus to transmit data at a specific time corresponding to the individual access ID; a control information notifying step of notifying the communication apparatus other than the communication apparatus having performed the assignment of control information including the assigned information of the individual access ID assigned in the individual ID assigning step; and a transmission control step of monitoring a communication state of the transmission line and transmitting data to the other communication apparatus at a common time when all the communication apparatuses can transmit data or at a specific time corresponding to the individual access ID, wherein the individual ID assigning step includes assigning the number of individual access IDs equal to or less than a predetermined number.

According to the above-mentioned invention, since the time for exclusive transmission is assigned to only a specific communication apparatus and the other communication apparatuses transmit data at a time to be used in common, an idle period can be reduced. Accordingly, even when the number of connected communication apparatuses increases, it is possible to prevent the occurrence of collision without deteriorating performance. The access IDs assigned to the communication apparatuses, particularly, the slave communication apparatuses, are arbitrary and is not fixed to the communication apparatuses. It is preferable that a fixed access ID is assigned to the master terminal, but the access ID may not be assigned fixedly when the master terminal only performs the management.

In the communication method according to the invention, the access ID assigning step includes not assigning the greater number of access IDs than a predetermined number. According to the above-mentioned invention, since the greater number of times for exclusive transmission than the predetermined number is assigned to only a specific communication apparatus, an idle period can be reduced. Accordingly, even when the number of connected communication apparatuses increases, it is possible to prevent the occurrence of collision without deteriorating performance.

In the communication method according to the invention, the individual ID assigning step includes assigning the individual access ID to the communication apparatus transmitting data to the different communication apparatus at the common time. According to the invention, since the individual access ID is assigned to the communication apparatus starting the new transmission of data, the communication apparatus intending to continuously transmit data can efficiently transmit the data.

In the communication method according to the invention, the control information notifying step includes notifying information on the newly assigned individual access ID, the identification information for identifying the communication apparatus having the individual access information assigned thereto, and the number of effective individual access IDs among the individual access IDs as the control information. According to the invention, all the communication apparatuses can rapidly and reliably acquire the control information on the assignment of the individual access IDs and the like.

The communication method according to the invention further includes an individual ID managing step of managing the assigned individual access IDs and the individual ID managing step includes monitoring the transmission time at a specific time corresponding to the individual access IDs and deleting the corresponding individual access ID when the transmission of data is not performed for a predetermined time at the specific time. According to the invention, it is possible to reliably delete the individual access ID assigned to the communication apparatus having ended the transmission of data, thereby effectively using the transmission slots.

In the communication method according to the invention, when the assigned individual access ID is deleted in the individual ID managing step, the control information notifying step includes notifying information on the newly assigned individual access ID, the identification information for identifying the communication apparatus having the individual access information assigned thereto, and the number of effective individual access IDs among the individual access IDs as the control information. According to the invention, all the communication apparatuses can rapidly and reliably acquire the control information on the assignment of the individual access IDs as the control information. According to the invention, when the individual access ID having the greatest number is deleted, the different individual access IDs are not changed and only the information on the number of individual access IDs is changed.

In the communication method according to the invention, when the different communication apparatuses do not data, the transmission control step includes counting the elapse of a predetermined period every predetermined period, recognizing the time corresponding to the individual access ID and the common time on the basis of the counted value, and controlling the transmission of data to the different communication apparatus. According to the invention, it is possible to automatically manage the transmission time on the basis of the access ID.

In the communication method according to the invention, when the transmission of data at the common time conflicts with the transmission of data of the different communication apparatuses, the transmission control step includes re-transmitting data at the common time after a random time passes. According to the invention, even when a collision occurs due to the transmission at the common time, it is possible to avoid the collision and to transmit data by re-transmission.

In the communication method according to the invention, when data is transmitted at a time corresponding to the individual access IDs, the transmission control step includes transmitting data at a time corresponding to the individual access IDs based on the counted value after a random time passes. According to the invention, it is possible to average transmittable rates of the plural communication apparatuses.

The communication method according to the invention further includes an acknowledgement frame transmitting step of receiving the data transmitted in the transmission control step and returning an acknowledgement frame in response to the data, and the acknowledgement frame transmitting step includes adding to the acknowledgement frame information indicating that the time at which the received data has been transmitted is the common time or information on the individual access IDs corresponding to the specific time. According to the invention, by adding the information on the individual access ID to the acknowledgement frame, it is possible to notify a terminal (hidden terminal) not directly receiving data of the common time or the specific time.

The communication method according to the invention further includes a special frame transmitting step of transmitting a special frame regardless of the common time and the specific time corresponding to the individual access IDs, and the special frame transmitting step includes adding the individual access IDs corresponding to the time when the previously received data has been transmitted among the data transmitted in the transmission control step to the special frame. According to the invention, by adding the information on the individual access IDs corresponding to the previously received data frame to the frame (beacon frame and the like) transmitted in a band (for example, a beacon band and a VoIP reservation band) secured in a method other than the above-mentioned method, it is possible to hand over the previously used transmission time (the common time or the specific time) when the communication is restarted in the method according to the invention.

The communication method according to the invention includes a communication method of communicating using a power line as the transmission line.

According to another aspect of the invention, there is provided a communication apparatus used for a communication system for allowing a plurality of communication apparatuses sharing a communication band to communicate with each other through a transmission line, the communication apparatus including: an access ID managing unit assigning an identification number to a specific communication apparatus of the plurality of communication apparatuses and assigning the individual access ID allowing only the assigned communication apparatus to transmit data at a specific time corresponding to the individual access ID; and a notification unit notifying different communication apparatuses of control information including assignment information of the individual access ID assigned by the access ID managing unit, wherein the access ID managing unit assigns the individual access IDs corresponding to the number equal to or less than a predetermined number and assigns the individual access IDs to the communication apparatuses having transmitted data at a common time when data transmitted at the common time when all the communication apparatuses can transmit data.

In the communication apparatus according to the invention, the access ID managing unit does not assign the individual access IDs corresponding to the number greater than the predetermined number.

In the communication apparatus according to the invention, the notification unit notifies information on the individual access ID newly assigned by the access ID managing unit, the identification information for identifying the communication apparatus having the individual access information assigned thereto, and the number of effective individual access IDs among the individual access IDs as the control information. According to the invention, all the communication apparatuses can rapidly and reliably acquire the control information on the assignment of the individual access IDs as the control information.

In the communication apparatus according to the invention, the access ID managing unit monitors the transmission time at the specific time corresponding to the individual access IDs and deletes the individual access ID when data is not transmitted for a constant time at the specific time.

In the communication apparatus according to the invention, when the access ID managing unit deletes the individual access ID, the notification information notifies information on the individual access ID of which the communication apparatus is changed, the identification information for identifying the communication apparatus having the individual access information assigned thereto, and the number of effective individual access IDs among the individual access IDs as the control information. According to the invention, all the communication apparatuses can rapidly and reliably acquire the control information on the assignment of the individual access IDs as the control information.

According to another aspect of the invention, there is provided a communication apparatus used for a communication system for allowing a plurality of communication apparatuses sharing a communication band to communicate with each other through a transmission line, the communication apparatus comprising: an access ID managing unit managing acquisition or abandonment of an individual access ID corresponding to a specific transmission time and allowing only the communication apparatus having the individual access ID assigned thereto to transmit data at the specific transmission time; and a transmission control unit controlling the transmission of data to the different communication apparatuses using the individual access ID when the individual access ID is acquired and controlling the transmission of data to the different communication apparatuses at a common time when all the communication apparatuses can transmit data when the individual access ID is abandoned, wherein the transmission control unit counts the elapse of a predetermined period every predetermined period when the different communication apparatuses do not transmit data, recognizes a time corresponding to the individual access ID and the common time on the basis of the counted value, and controls the transmission of data to the different communication apparatuses.

In the communication apparatus according to the invention, the transmission control unit re-transmits data at the common time in a random time after the transmission of data at the common time conflicts with the transmission of data from the different communication apparatuses.

In the communication apparatus according to the invention, the transmission control unit transmits data at the time corresponding to the individual access ID based on the counted value in a random time when data is transmitted at the time corresponding to the individual access ID.

In the communication apparatus according to the invention, the access ID managing unit abandons the individual access ID when the period for which data is not transmitted at the time corresponding to the acquired individual access ID is equal to or greater than a predetermined time.

The communication apparatus according to the invention further includes an acknowledgement frame transmission control unit receiving data transmitted from the transmission control unit of a different communication apparatus and returning an acknowledgement frame in response to the received data, and the acknowledgement frame transmission control unit adds to the acknowledgement frame information indicating that the time at which the received data has been transmitted is the common time or information on the individual access IS corresponding to the specific time.

The communication apparatus according to the invention further includes a special frame transmission control unit transmitting a special frame to be transmitted regardless of the common time or the specific time corresponding to the individual access ID, and the special frame transmission control unit adds the individual access ID corresponding to the time at which the previously received data has been transmitted to the special frame.

The communication apparatus according to the invention performs a power-line communication using a power line as a transmission line.

A communication system according to the invention includes a plurality of communication apparatuses described above and includes at least one communication apparatus having the access ID managing unit assigning the individual access ID.

In the communication system according to the invention, the communication apparatus performs a power-line communication using a power line as a transmission line.

### Industrial Applicability

According to the invention, even when the number of connected communication apparatuses Increases, it is possible to prevent the occurrence of collision to prevent the deterioration in performance and to define the maximum delay of transmission. Accordingly, the invention is useful for a communication method, a communication system, and a communication apparatus therefor, which can set the priority.

## Claims

1. A communication method performed in a communication apparatus (100T1) that is connectable to a transmission path to which a first other communication apparatus (100T2) that transmits data including a first transmission priority and a second other communication apparatus (100T3) that transmits data including a second transmission priority are connected, wherein the communication apparatus (100T1) transmits data including a transmission priority, the communication method **characterized by** the steps of:
calculating a priority difference between the transmission priority and a maximum transmission priority found among the first transmission priority and the second transmission priority; and
calculating a waiting time for transmitting data based on the priority difference and the total number of communication apparatuses (100T1, 100T2, 100T3) that transmit the data.

2. The communication method according to claim 1, wherein
the communication apparatus (100T1), the first other communication apparatus (100T2) and the second other communication apparatus (100T3) are assigned an access ID, a first access ID and a second access ID for initiating the transmission of data, respectively,
the communication apparatus (100T1), the first other communication apparatus (100T2) and the second other communication apparatus (100T3) transmit data at timings corresponding to the access ID, the first access ID and the second access ID, respectively.

3. The communication method according to claim 1 or 2, wherein
the waiting time includes a fixed value and a random value determined based on the priority difference and the total number of communication apparatuses (100T1, 100T2, 100T3).

4. The communication method according to claim 2, wherein
a communication management apparatus (100M) is connected to the transmission path, wherein the communication management apparatus (100M) manages the communication of the communication apparatus (100T1), the first other communication apparatus (100T2) and the second other communication apparatus (100T3), and
the communication management apparatus (100M) transmits a frame for notifying the communication apparatus (100T1), the first other communication apparatus (100T2) and the second other communication apparatus (100T3) of assignment information for the access ID, the first access ID and the second access ID.

5. The communication method according to claim 1, wherein
the maximum transmission priority is found among the transmission priority and the first transmission priority and the second transmission priority.

6. The communication method according to claim 5, wherein
the communication apparatus (100T1) and the first other communication apparatus (100T2) and the second other communication apparatus (100T3) are respectively assigned an active ID.

7. The communication method according to claim 6, wherein
a total number of active IDs which assigned to communication apparatuses (100T1, 100T2, 100T3) correspond to the total number of communication apparatuses (100T1, 100T2, 100T3).

8. The communication method according to claim 1, wherein
receiving the priority difference and the total number of communication apparatuses from a communication management apparatus (100M).

9. A communication apparatus (100T1) that is connectable to a transmission path to which a first other communication apparatus (100T2) that transmits data including a first transmission priority and a second other communication apparatus (100T3) that transmits data including a second transmission priority are connected, wherein the communication apparatus (100T1) transmits data including a transmission priority, the communication apparatus **characterized by**:
a controller (211) that is configured to calculate a priority difference between the transmission priority and the maximum transmission priority found among the first transmission priority and the second transmission priority, and to calculate a waiting time for transmitting data based on the priority difference and the total number of communication apparatuses (100T1, 100T2, 100T3) that transmit the data.

10. The communication method according to claim 9, wherein
the maximum transmission priority is found among the transmission priority and the first transmission priority and the second transmission priority.

11. The communication method according to claim 10, wherein
the communication apparatus (100T1) and the first other communication apparatus (100T2) and the second other communication apparatus (100T3) are respectively assigned an active ID.

12. The communication method according to claim 11, wherein
a total number of active IDs which assigned to communication apparatuses (100T1, 100T2, 100T3) correspond to the total number of communication apparatuses (100T1, 100T2, 100T3).

13. The communication method according to claim 9, wherein
the controller (211) receives the priority difference and the total number of communication apparatuses from a communication management apparatus (100M).

## Patentansprüche

1. Kommunikationsverfahren, das in einer Kommunikationsvorrichtung (100T1) ausgeführt wird, die mit einem Übermittlungspfad verbindbar ist, mit dem eine erste andere Kommunikationsvorrichtung (100T2), die Daten mit einer ersten Übermittlungspriorität übermittelt, und eine zweite andere Kommunikationsvorrichtung (100T3) verbunden sind, die Daten mit einer zweiten Übermittlungspriorität übermittelt, wobei die Kommunikationsvorrichtung (100T1) Daten mit einer Übermittlungspriorität übermittelt, wobei das Kommunikationsverfahren **gekennzeichnet ist durch** die Schritte:
Berechnen einer Prioritätsdifferenz zwischen der Übermittlungspriorität und einer maximalen Übermittlungspriorität, die bei der ersten Übermittlungspriorität und der zweiten Übermittelungspriorität gefunden wurde, und
Berechnen einer Wartezeit zum Übermitteln von Daten auf Basis der Prioritätsdifferenz und der Gesamtzahl von Kommunikationsvorrichtungen (100T1, 100T2, 100T3), die die Daten übermitteln.

2. Kommunikationsverfahren nach Anspruch 1, wobei
die Kommunikationsvorrichtung (100T1), die erste andere Kommunikationsvorrichtung (100T2) und die zweite andere Kommunikationsvorrichtung (100T3) jeweils mit einer Zugriffs-ID, einer ersten Zugriffs-ID und einer zweiten Zugriffs-ID zum Initiieren der Übermittlung von Daten versehen sind,
die Kommunikationsvorrichtung (100T1), die erste andere Kommunikationsvorrichtung (100T2) und die zweite andere Kommunikationsvorrichtung (100T3) jeweils Daten zu Zeiten entsprechend der Zugriffs-ID, der ersten Zugriffs-ID und der zweiten Zugriffs-ID übermitteln.

3. Kommunikationsverfahren nach Anspruch 1 oder 2, wobei
die Wartezeit einen festen Wert und einen Zufallswert umfasst, der auf Basis der Prioritätsdifferenz und der Gesamtzahl von Kommunikationsvorrichtungen (100T1, 100T2, 100T3) bestimmt ist.

4. Kommunikationsverfahren nach Anspruch 2, wobei
eine Kommunikationsverwaltungsvorrichtung (100M) mit dem Übermittlungspfad verbunden ist, wobei die Kommunikationsverwaltungsvorrichtung (100M) die Kommunikation der Kommunikationsvorrichtung (100T1), der ersten anderen Kommunikationsvor-richtung (100T2) und der zweiten anderen Kommunikationsvorrichtung (100T3) verwaltet, und
die Kommunikationsverwaltungsvorrichtung (100M) einen Frame zum Benachrichtigen der Kommunikationsvorrichtung (100T1), der ersten anderen Kommunikationsvorrichtung (100T2) und der zweiten anderen Kommunikationsvorrichtung (100T3) hinsichtlich Zuordnungsinformation für die Zugriffs-ID, die erste Zugriffs-ID und die zweite Zugriffs-ID übermittelt.

5. Kommunikationsverfahren nach Anspruch 1, wobei
die maximale Übermittlungspriorität in der Übermittlungspriorität, der ersten Übermittlungspriorität und der zweiten Übermittlungspriorität gefunden wird.

6. Kommunikationsverfahren nach Anspruch 5, wobei
der Kommunikationsvorrichtung (100T1) und der ersten anderen Kommunikationsvorrichtung (100T2) und der zweiten anderen Kommunikationsvorrichtung (100T3) jeweils eine aktive ID zugewiesen wird.

7. Kommunikationsverfahren nach Anspruch 6, wobei
eine Gesamtzahl von aktiven IDs, die den Kommunikationsvorrichtungen (100T1, 100T2, 100T3) zugewiesen werden, der Gesamtzahl von Kommunikationsvorrichtungen (100T1, 100T2, 100T3) entspricht.

8. Kommunikationsverfahren nach Anspruch 1, wobei
Empfangen der Prioritätsdifferenz und der Gesamtzahl von Kommunikationsvorrichtungen von einer Kommunikationsverwaltungsvorrichtung (100M).

9. Kommunikationsvorrichtung (100T1) die mit einem Übermittlungspfad verbindbar ist, mit dem eine erste andere Kommunikationsvorrichtung (100T2), die Daten mit einer ersten Übermittlungspriorität übermittelt, und eine zweite andere Kommunikationsvorrichtung (100T3) verbunden sind, die Daten mit einer zweiten Übermittlungspriorität übermittelt, wobei die Kommunikationsvorrichtung (100T1) Daten mit einer Übermittlungspriorität übermittelt, wobei die Kommunikationsvorrichtung **gekennzeichnet ist durch**:
eine Steuereinheit (211), die ausgestaltet ist, eine Prioritätsdifferenz zwischen der Übermittlungspriorität und der maximalen Übermittlungspriorität zu berechnen, die bei der ersten Übermittlungspriorität und der zweiten Übermittlungspriorität gefunden wurde, und eine Wartezeit zum Übermitteln von Daten auf Basis der Prioritätsdifferenz und der Gesamtzahl von Kommunikationsvorrichtungen (100T1, 100T2, 100T3) zu berechnen, die die Daten übermitteln.

10. Kommunikationsverfahren nach Anspruch 9, wobei
die maximale Übermittlungspriorität bei der Übermittlungspriorität, der ersten Übermittlungspriorität und der zweiten Übermittlungspriorität gefunden wird.

11. Kommunikationsverfahren nach Anspruch 10, wobei
der Kommunikationsvorrichtung (100T1) und der ersten anderen Kommunikationsvorrichtung (100T2) und der zweiten anderen Kommunikationsvorrichtung (100T3) jeweils eine aktive ID zugewiesen wird.

12. Kommunikationsverfahren nach Anspruch 11, wobei
eine Gesamtzahl von aktiven IDs, die zu Kommunikationsvorrichtungen (100T1, 100T2, 100T3) zugewiesen werden, der Gesamtzahl von Kommunikationsvorrichtungen (100T1, 100T2, 100T3) entspricht.

13. Kommunikationsverfahren nach Anspruch 9, wobei
die Steuereinheit (211) die Prioritätsdifferenz und die Gesamtzahl von Kommunikationsvorrichtungen von einer Kommunikationsverwaltungsvorrichtung (100M) empfängt.

## Revendications

1. Procédé de communication mis en oeuvre dans un appareil de communication (100T1) qui peut être connecté à une voie de transmission à laquelle un premier autre appareil de communication (100T2) qui transmet des données comportant une première priorité de transmission et un deuxième autre appareil de communication (100T3) qui transmet des données comportant une deuxième priorité de transmission sont connectés, dans lequel l'appareil de communication (100T1) transmet des données comportant une priorité de transmission, le procédé de communication étant **caractérisé par** les étapes consistant à :
calculer une différence de priorité entre la priorité de transmission et une priorité de transmission maximale trouvée parmi la première priorité de transmission et la deuxième priorité de transmission ; et
calculer un temps d'attente de transmission de données sur la base de la différence de priorité et du nombre total d'appareils de communication (100T1, 100T2, 100T3) qui transmettent les données.

2. Procédé de communication selon la revendication 1, dans lequel
l'appareil de communication (100T1), le premier autre appareil de communication (100T2) et le deuxième autre appareil de communication (100T3) se voient attribuer un identifiant d'accès, un premier identifiant d'accès et un deuxième identifiant d'accès pour initier la transmission de données, respectivement,
l'appareil de communication (100T1), le premier autre appareil de communication (100T2) et le deuxième autre appareil de communication (100T3) transmettent des données à des moments correspondant à l'identifiant d'accès, au premier identifiant d'accès et au deuxième identifiant d'accès, respectivement.

3. Procédé de communication selon la revendication 1 ou 2, dans lequel
le temps d'attente comporte une valeur fixe et une valeur aléatoire déterminée sur la base de la différence de priorité et du nombre total d'appareils de communication (100T1, 100T2, 100T3).

4. Procédé de communication selon la revendication 2, dans lequel
un appareil de gestion de communication (100M) est connecté à la voie de transmission, dans lequel l'appareil de gestion de communication (100M) gère la communication de l'appareil de communication (100T1), du premier autre appareil de communication (100T2) et du deuxième autre appareil de communication (100T3), et
l'appareil de gestion de communication (100M) transmet une trame pour notifier l'appareil de communication (100T1), le premier autre appareil de communication (100T2) et le deuxième autre appareil de communication (100T3) d'informations d'attribution pour l'identifiant d'accès, le premier identifiant d'accès et le deuxième identifiant d'accès.

5. Procédé de communication selon la revendication 1, dans lequel
la priorité de transmission maximale est trouvée parmi la priorité de transmission et la première priorité de transmission et la deuxième priorité de transmission.

6. Procédé de communication selon la revendication 5, dans lequel
l'appareil de communication (100T1) et le premier autre appareil de communication (100T2) et le deuxième autre appareil de communication (100T3) se voient respectivement attribuer un identifiant actif.

7. Procédé de communication selon la revendication 6, dans lequel
un nombre total d'identifiants actifs qui sont attribués à des appareils de communication (100T1, 100T2, 100T3) correspond au nombre total d'appareils de communication (100T1, 100T2, 100T3).

8. Procédé de communication selon la revendication 1, comprenant
une réception de la différence de priorité et du nombre total d'appareils de communication à partir d'un appareil de gestion de communication (100M).

9. Appareil de communication (100T1) qui peut être connecté à une voie de transmission à laquelle un premier autre appareil de communication (100T2) qui transmet des données comportant une première priorité de transmission et un deuxième autre appareil de communication (100T3) qui transmet des données comportant une deuxième priorité de transmission sont connectés, dans lequel l'appareil de communication (100T1) transmet des données comportant une priorité de transmission, l'appareil de communication étant **caractérisé par** :
un contrôleur (211) qui est configuré pour calculer une différence de priorité entre la priorité de transmission et la priorité de transmission maximale trouvée parmi la première priorité de transmission et la deuxième priorité de transmission, et pour calculer un temps d'attente de transmission de données sur la base de la différence de priorité et du nombre total d'appareils de communication (100T1, 100T2, 100T3) qui transmettent les données.

10. Procédé de communication selon la revendication 9, dans lequel
la priorité de transmission maximale est trouvée parmi la priorité de transmission et la première priorité de transmission et la deuxième priorité de transmission.

11. Procédé de communication selon la revendication 10, dans lequel
l'appareil de communication (100T1) et le premier autre appareil de communication (100T2) et le deuxième autre appareil de communication (100T3) se voient respectivement attribuer un identifiant actif.

12. Procédé de communication selon la revendication 11, dans lequel
un nombre total d'identifiants actifs qui sont attribués à des appareils de communication (100T1, 100T2, 100T3) correspond au nombre total d'appareils de communication (100T1, 100T2, 100T3).

13. Procédé de communication selon la revendication 9, dans lequel
le contrôleur (211) reçoit la différence de priorité et le nombre total d'appareils de communication à partir d'un appareil de gestion de communication (100M).
